(19) Europäisches Patentamt
European Patent Office
Office européen des brevets

(11) **EP 3 159 710 B1**

(12) **EUROPÄISCHE PATENTSCHRIFT**

(45) Veröffentlichungstag und Bekanntmachung des Hinweises auf die Patenterteilung:
**24.04.2019 Patentblatt 2019/17**

(51) Int Cl.:
***G01S 5/14*** *(2006.01)*     ***G01S 5/10*** *(2006.01)*
***G01S 13/87*** *(2006.01)*     ***G01S 5/02*** *(2010.01)*

(21) Anmeldenummer: **16002260.4**

(22) Anmeldetag: **24.10.2016**

(54) **VERFAHREN ZUM BESTIMMEN EINER POSITION EINER MOBILEINHEIT**

METHOD FOR DETERMINING A POSITION OF A MOBILE UNIT

PROCÉDÉ DE DÉTERMINATION DE POSITION D'UNE UNITÉ MOBILE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **23.10.2015 DE 102015118152**

(43) Veröffentlichungstag der Anmeldung:
**26.04.2017 Patentblatt 2017/17**

(73) Patentinhaber: **clownfish information technology GmbH**
**6912 Hörbranz (AT)**

(72) Erfinder:
• **Ritschel, Patrick**
**6912 Hörbranz (AT)**

• **Auer, Wolfgang**
**6890 Lustenau (AT)**

(74) Vertreter: **Heyerhoff Geiger & Partner Patentanwälte PartGmbB**
**Heiligenbreite 52**
**88662 Überlingen (DE)**

(56) Entgegenhaltungen:
WO-A1-2015/006979    FR-A1- 2 747 003
GB-A- 2 326 550    US-A- 5 504 477
US-A1- 2005 282 558    US-A1- 2011 135 149
US-A1- 2012 296 453    US-A1- 2014 004 877
US-A1- 2015 005 016

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 3 159 710 B1

**Beschreibung**

Die Erfindung betrifft ein Verfahren zum Bestimmen einer Position einer Mobileinheit relativ zu zumindest drei Basiseinheiten, bei dem die Mobileinheit zumindest ein Signal versendet und die Basiseinheiten dieses empfangen und als Trigger für ein Aussenden eines Antwortsignals an eine Auswerteeinheit verwenden.

Es gibt zahlreiche technische Gebiete, in denen es gewünscht oder sogar erforderlich ist, Positionsinformationen zu ermitteln. So kann es z.B. im Bauwesen erforderlich sein, beim Bau eines Gebäudes zur Lokalisierung einer bauplangemäßen Position eines Gebäudeelements Positionsinformationen zu ermitteln. Ferner ist es im Bereich des Sports oftmals gewünscht, Positionsinformationen zu ermitteln, insbesondere für statistische Zwecke und/oder zur Analyse von Spielzügen.

Da eine manuelle Ermittlung von Positionsinformationen häufig zeitaufwendig und/oder fehleranfällig ist, gibt es Bestrebungen, Positionsinformationen automatisiert zu ermitteln. Bisher bekannte Verfahren zur automatisierten Ermittlung von Positionsinformationen basieren in der Regel auf kameragestützten Abtastungen, Laser-Scanning und/oder GPS-Abstandsmessungen. Die zur Durchführung solcher automatisierter Verfahren benötigten Kameras, Laser-Systeme und/oder GPS-Empfänger sind mit hohen Investitionskosten verbunden.

Aus der US 2014/0004877 A1 und der WO 2015/006979 A1 ist es bekannt, aus Hin- und Rücklaufzeiten von Signalen zwischen Einheiten den Abstand der Einheiten zueinander zu bestimmen. Sind zumindest drei Einheiten vorhanden, können aus den Abständen die Positionen der Einheiten zueinander bestimmt werden.

US 2005/0282558 A1 beschreibt ein Verfahren, bei denen die Position einer Mobileinheit relativ zu drei Basiseinheiten durch Hin- und Rücklaufzeiten von Signalen zwischen den Einheiten bestimmt wird. Ein optisches Tracken der Positionen von Spielern auf einem Spielfeld ist in der US 2011/0135149 A1 beschrieben.

Eine Aufgabe der Erfindung ist, ein Verfahren anzugeben, welches eine kostengünstige Ermittlung einer Positionsinformation ermöglicht.

Diese Aufgabe wird durch ein Verfahren der eingangs genannten Art gelöst, bei dem erfindungsgemäß die Auswerteeinheit den Eingangszeitpunkt der Antwortsignale bei sich und aus der bekannten Position der Basiseinheiten zur Auswerteeinheit die Absendezeitpunkte der Antwortsignale von den Basiseinheiten ermittelt und daraus und den Latenzzeiten der Basiseinheiten die Empfangszeitpunkte des Signals der Mobileinheit bei den Basiseinheiten und daraus die Zeitdifferenz zwischen den einzelnen Empfangszeitpunkten und daraus zumindest zwei Teilräume berechnet und aus dem Schnittpunkt der Teilräume die Position der Mobileinheit bestimmt.

Das Verfahren ermöglicht eine kostengünstige Ermittlung einer Position der Mobileinheit, da Einheiten zur Durchführung des Verfahrens einfach herzustellen oder zu erwerben sind. Auf den Einsatz von GPS-Empfängern, Kameras und/oder Laser-Systemen zur Ermittlung der Positionsinformation kann verzichtet werden. Ist beispielsweise ein Objekt zu lokalisieren, kann die Mobileinheit am oder im Objekt angeordnet werden. Hierdurch können die Positionsinformationen, welche eine Ist-Position des Objekts angeben oder in einfacher Weise ermittelbar machen, einfach bestimmt werden. Anhand der Positionsinformationen kann, insbesondere von einer Auswerteeinheit, die Ist-Position der Mobileinheit beziehungsweise des Objekts ermittelt werden.

Die einzelnen Positionsinformationen können eine oder mehrere Ortskoordinaten umfassen oder aus diesen bestehen. Ebenso möglich ist eine Ortsfunktion, beispielsweise eine eindimensionale oder mehrdimensionale Linie beziehungsweise Geometrie im Raum. Vorzugsweise charakterisieren die Positionsinformationen die Ist-Position der Mobileinheit.

Eine Positionsinformation kann eine null-, ein- oder zweidimensionale Teilmenge eines Ortsraums sein, insbesondere eine zweidimensionale Teilmenge eines dreidimensionalen Ortsraums. Je nach Messgenauigkeit kann die Teilmenge durch die Messungenauigkeit um eine Dimension erweitert sein. Ist eine Positionsinformation beispielweise eine zweidimensionale Fläche im Raum, so kann sie durch die Messungenauigkeit eine gewisse Dicke aufweisen, also in die dritte Dimension erweitert sein. Eine Schnittgeometrie von drei Positionsinformationen bildet in diesem Fall keinen Punkt, sondern ein Raumvolumen, dessen Größe von der Messungenauigkeit abhängt. Die Mobileinheit befindet sich nun zweckmäßigerweise in einer dieser Art erweiterten Teilmenge des Raums.

Die zweite Positionsinformation wird in der gleichen Weise ermittelt, wie die erste Positionsinformation. Dies beinhaltet, dass zur Ermittlung der beiden Positionsinformationen dasselbe Signal oder ein gleiches Signal und dieselben Basiseinheiten oder zumindest teilweise andere Basiseinheiten verwendet werden. Die Bestimmungsmethode, z.B. eine Berechnungsformel, ist hierbei zweckmäßigerweise identisch.

Die Ist-Position der Mobileinheit kann z.B. in Form einer Relativposition bezüglich eines Bezugspunkts ermittelt werden. Am Bezugspunkt kann eine der Basiseinheiten oder eine Auswerteeinheit angeordnet sein. Um aus der Relativposition eine Absolutposition der Mobileinheit ermitteln zu können, beispielsweise in einem geostationären Koordinatensystem, ist es zweckmäßig, wenn eine Absolutposition des Bezugspunkts bekannt ist. Ein Bezugspunkt kann bereits an sich ein geografisch unbeweglicher Punkt sein, wie z.B. eine Geo-Koordinate oder ein Gebäude, ein im Bezugsraum unbeweglicher Punkt, wie ein fester Punkt in einem Schiff oder auf einer Hebebühne, oder ein anderer bekannter Ort.

Zweckmäßigerweise ist die Mobileinheit tragbar. Die Mobileinheit ist insbesondere dazu geeignet, von einem Mensch am Körper getragen zu werden, z.B. durch Befestigung an Kleidung. Zu diesem Zweck kann die Mobileinheit eine entsprechende Formgebung und/oder ein entsprechendes Befestigungsmittel, wie z.B. einen Clip, aufweisen.

Als Basiseinheit kann eine solche Einheit aufgefasst werden, die zwar grundsätzlich mobil beziehungsweise tragbar ist, jedoch zweckmäßigerweise in einer fixen Position, wie einem Bezugspunkt, verbleibt, solange die Positionsinformationen ermittelt werden.

Zweckmäßigerweise ist die jeweilige Position der Basiseinheiten bekannt. Falls eine oder mehrere dieser Positionen zunächst unbekannt sind, kann diese mittels Triangulation oder einem anderen Positionsermittlungsverfahren ermittelt werden. Hierzu kann eine der Basiseinheiten mit unbekannter Position als Mobileinheit verwendet werden, deren Position erfindungsgemäß bestimmt wird. Anschließend verbleibt die derart vermessene Basiseinheit an ihrem Ort, und die Position der eigentlichen Mobileinheit wird vermessen.

Die beiden Positionsinformationen werden unter Verwendung zumindest einer dritten Basiseinheit aus demselben Signal bestimmt. Das eine Signal wird insofern von zumindest drei Basiseinheiten empfangen. Diese bestimmen zweckmäßigerweise den Empfangszeitpunkt des Signals, also den Zeitpunkt, an dem sie das Signal empfangen haben, oder einen damit in vorbestimmter Weise verknüpften Zeitpunkt. Aus den Empfangszeitpunkten können die Positionsinformationen bestimmt werden.

Eine Positionsinformation kann in einfacher Weise bestimmt werden, wenn die Laufzeitgröße eine Zeitdifferenz zwischen den Empfangszeiten beziehungsweise Empfangszeitpunkten des Signals an zwei der Einheiten ist, insbesondere an zwei Basiseinheiten bei einem von der Mobileinheit gesendeten Signal. Aus der Zeitdifferenz kann ein Teilraum, also eine Teilmenge des 3-dimensionalen Ortsraums, bestimmt werden, in dem die sendende Einheit angeordnet sein muss. Durch Schneiden von zwei oder mehr solcher als Teilräume ausgeführten Positionsinformationen kann die Position der sendenden Einheit im Rahmen der Messungenauigkeit bestimmt werden.

Je nach Art der Laufzeitgröße kann die Positionsinformation eine Fläche im Raum sein. Die Fläche ist vorzugsweise eine gekrümmte Fläche, insbesondere eine Rotationsfläche, und kann ein Rotationsparaboloid sein. Je nach Messungenauigkeit kann die Fläche eine Dicke aufweisen, die der Messungenauigkeit entspricht, so dass die Fläche einen dreidimensionalen Teilraum bildet.

Weiter ist es vorteilhaft, wenn die Position der Mobileinheit aus einer Schnittmenge der beiden Positionsinformation ermittelt wird. Beispielsweise werden zwei Linien gekreuzt oder zwei Flächen geschnitten, so dass ein Kreuzungspunkt beziehungsweise eine Schnittlinie entsteht. Bei Verwendung von Flächen als Positionsinformationen werden vorzugsweise zumindest drei Flächen geschnitten, so dass ein Schnittpunkt entsteht.

Vorzugsweise ist die ermittelte Positionsinformation eine Fläche, wenn der Bezugsraum 3-dimensional ist. Wenn der Bezugsraum hingegen 2-dimensional ist, ist die ermittelte Positionsinformation vorzugsweise eine Linie, insbesondere eine gekrümmte Linie. Die Linie kann insbesondere einer Schnittlinie entsprechen, in welcher eine Fläche im 3-dimensionalen Ortsraum den Bezugsraum, z.B. einen Boden eines Raums, schneidet.

Im Falle eines 2-dimensionalen Bezugsraums kann eine Ermittlung der Ist-Position der Mobileinheit anhand der Schnittmenge zweier Positionsinformationen erfolgen. Ein 2-dimensionaler Bezugsraum kann dann vorliegen, wenn eine Raumkoordinate, insbesondere die Höhenkoordinate, der Mobileinheit bekannt oder irrelevant ist, wie z.B. auf einer Theaterbühne ohne Erhebungen.

Eine weitere vorteilhafte Ausführungsform der Erfindung sieht vor, dass eine der Einheiten das Signal empfängt und mit einer vorbestimmten Latenzzeit nach Empfang des Signals ein Antwortsignal aussendet und die Laufzeitgröße eine Signalrückkehrdauer ist. Die Signalrückkehrdauer kann eine Zeit von Aussenden des Signals bis zum Empfangen des Antwortsignals sein. Zweckmäßigerweise wird das Antwortsignal von der Einheit empfangen, die das erste Signal ausgesendet hat. Diese Einheit kann nun die Signalrückkehrdauer bestimmen, oder den Zeitpunkt des Aussendens des Signals und den Zeitpunkt des Empfangens des Antwortsignals an eine Auswerteeinheit schicken, die daraus die Signalrückkehrdauer bestimmt. Aus der Signalrückkehrdauer und der bekannten Latenzzeit können die Signallaufzeit und daraus der Abstand zwischen den beiden Einheiten bestimmt werden.

Besonders vorteilhaft ist es, wenn das Signal von der Mobileinheit ausgesendet wird und die beiden Basiseinheiten mit vorbestimmter Latenzzeit ein Antwortsignal an die Mobileinheit senden. Hierdurch können mit nur einem Signal so viele Abstände bestimmt werden, wie Antwortsignal gebende Basiseinheiten vorhanden sind. Die Relativposition der Mobileinheit zu den Basiseinheiten kann somit mit nur einem Signal errechnet werden.

Des Weiteren ist es vorteilhaft, wenn eine dritte Basiseinheit das Signal empfängt. Es kann eine dritte Positionsinformation ermittelt werden, so dass eine Positionsbestimmung im dreidimensionalen Raum erfolgen kann. Diese weitere Positionsbestimmung kann außerdem in einem zweidimensionalen Raum zur Ermittlung beziehungsweise zu einer weiteren Eingrenzung der Ist-Position der Mobileinheit verwendet werden.

Die Einheiten, zumindest die Basiseinheiten, weisen zweckmäßigerweise jeweils einen Zeitgeber auf. Die jeweilige Einheit kann insbesondere mithilfe ihres Zeitgebers einen Empfangszeitpunkt, an dem sie das Signal empfängt, ermitteln. Weiterhin können die Zeitgeber der einzelnen Einheiten zueinander synchronisiert sein. Zwecks einer Synchronisierung der Zeitgeber der Einheiten kann z.B. von der Auswerteeinheit ein Synchronisierungssignal an die Einheiten gesendet werden.

Die Einheiten müssen nicht notwendigerweise untereinander synchronisiert sein. Es ist jedoch vorteilhaft, wenn die Basiseinheiten untereinander synchronisiert sind, also die gleiche interne Zeit haben. Die Einheiten weisen hierfür zweckmäßigerweise eine Uhr auf, die mittels eines Empfangssignals gestellt werden kann. Vorteilhafterweise ist auch die Mobileinheit mit den Basiseinheiten synchronisiert.

Prinzipiell ist es möglich, dass mindestens zwei der Basiseinheiten jeweils ein Signal senden. Die Mobileinheit kann die Signale empfangen. Die erste Positionsinformation kann hierbei aus einer Laufzeitgröße bestimmt wird, die aus einem ersten Signal ermittelt wird, und die zweite Positionsinformation kann aus einer Laufzeitgröße bestimmt wird, die aus einem zweiten Signal ermittelt wird. Das zweite Signal kann von einer anderen der Basiseinheiten an die Mobileinheit oder von der Mobileinheit an eine andere der Basiseinheiten gesendet werden.

Ferner kann die Mobileinheit die Empfangszeitpunkte, an denen sie die Signale empfängt, feststellen. Weiterhin kann, insbesondere von einer Auswerteeinheit, anhand einer Zeitdifferenz dieser Empfangszeitpunkte eine Positionsinformation ermittelt werden, beispielsweise ein Teilraum, in welcher sich die Mobileinheit befindet.

In bevorzugter Weise umfasst das Signal eine Kennung der das Signal sendenden Einheit, beispielweise der Mobileinheit. Unter einer Kennung kann ein Zeichen zur eindeutigen Identifizierung der Einheit verstanden werden. Dadurch kann bei Verwendung mehrerer Mobileinheiten, für die jeweils eine Positionsinformation ermittelt werden soll, anhand der Kennung eindeutig ermittelt werden, von welcher der Mobileinheiten das Referenzsignal stammt.

Weiter ist es bevorzugt, wenn das Signal einen Zählwert umfasst. Zweckmäßigerweise wird der Zählwert von einem Zähler der sendenden Einheit bei jedem Versenden eines Signals hochgezählt. Durch Berücksichtigung des Zählwerts kann z.B. sichergestellt werden, dass bei der Ermittlung der oben erwähnten Zeitdifferenzen nur Empfangszeitpunkte desselben Referenzsignals und nicht etwa unterschiedlicher Referenzsignale berücksichtigt werden.

Gemäß einer vorteilhaften Ausführung der Erfindung übermittelt die erste Basiseinheit einen Empfangszeitpunkt, an dem die erste Basiseinheit das Referenzsignal von der Mobileinheit empfängt, an eine Auswerteeinheit. Zu diesem Zweck kann die Basiseinheit das Signal mit einem Zeitstempel versehen und an die Auswerteeinheit weiterleiten. Zudem ist es vorteilhaft, wenn die erste Basiseinheit ihre eigene Kennung, eine im Signal enthaltene Kennung der Mobileinheit und/oder einen im Signal enthaltenen Zählwert an die Auswerteeinheit übermittelt.

Die Übermittlung dieser Informationen an die Auswerteeinheit kann drahtlos und/oder über ein Kabel erfolgen.

In entsprechender Weise ist es vorteilhaft, wenn die oder jede der anderen Basiseinheiten einen Empfangszeitpunkt, an dem die jeweilige Basiseinheit das Referenzsignal von der Mobileinheit empfängt, ihre jeweilige Kennung, eine im Referenzsignal enthaltene Kennung der Mobileinheit und/oder einen im Referenzsignal enthaltenen Zählwert an die Auswerteeinheit übermittelt.

Zweckmäßigerweise ermittelt die Auswerteeinheit aus den an sie übermittelten Empfangszeitpunkten eine Zeitdifferenz.

Vorteilhafterweise übermittelt eine Basiseinheit, insbesondere falls ihr Funkkontakt zur Auswerteeinheit ausfällt, einen Empfangszeitpunkt, an dem sie das Referenzsignal von der Mobileinheit empfängt, eine im Signal enthaltene Kennung der Mobileinheit, ihre eigene Kennung und/oder einen im Signal enthaltenen Zählwert an eine andere Basiseinheit. Diese Versendung kann durch eine Empfängeradresse gezielt oder in Form eines Versands an alle Basiseinheiten erfolgen. Die andere Basiseinheit kann mindestens eine der von der ersten Basiseinheit erhaltenen Informationen an die Auswerteeinheit weiterleiten. Es kann hierdurch ein sogenanntes Signalhopping angewendet werden, also eine Weiterleitung von Informationen durch eine oder mehrere Zwischenstationen - die Basiseinheiten in diesem Fall - an einen Empfänger, die Auswerteeinheit. Auf diese Weise kann sichergestellt werden, dass die Auswerteeinheit auch Information von einer solchen Basiseinheit erhält, zu der ihr Funkkontakt fehlt.

Besonders bevorzugt ist es, wenn die Basiseinheit bei fehlendem Funkkontakt zur Auswerteeinheit sämtliche Informationen, welche sie bei bestehendem Funkkontakt zur Auswerteeinheit an diese übermittelt, an die andere Basiseinheit übermittelt.

In einer vorteilhaften Weiterbildung der Erfindung ist vorgesehen, dass die Mobileinheit einen Sensor aufweist, von dem ein Sensorsignal erzeugt wird. Das Sensorsignal kann beispielsweise von einer Ausrichtung und/oder einem Bewegungszustand, insbesondere von einer Geschwindigkeit und/oder einer Beschleunigung, der Mobileinheit abhängig sein. Der Sensor kann u.a. ein Abstandsensor, ein Beschleunigungssensor, ein Sensor zur Ermittlung der lokalen Erdmagnetfeldrichtungoder eine andere Art von Sensor sein.

Das Sensorsignal wird zweckmäßigerweise über einen drahtlosen Kommunikationskanal, wie über das Netzwerk der Einheiten, und insbesondere zusätzlich über ein Funknetz (GSM), WLAN oder dergleichen an die Auswerteeinheit übermittelt.

Vorzugsweise wird die Ist-Position der Mobileinheit unter Berücksichtigung des Sensorsignals ermittelt, insbesondere von der Auswerteeinheit. Die Ermittlung der Laufzeitgröße, wie der Empfangszeitpunkte beziehungsweise der Zeitdifferenz der Empfangszeitpunkte, können mit Ungenauigkeiten behaftet sein. Mithilfe des Sensorsignals ist es möglich, bei der Ermittlung der Ist-Position der Mobileinheit einen oder mehrere weitere Parameter, beispielsweise die Ausrichtung und/oder den Bewegungszustand der Mobileinheit zu berücksichtigen. Unter Hinzuziehung eines solchen Parameters ist es möglich, die Ist-Position der Mobileinheit genauer zu bestimmen, beispielsweise durch Berechnungen und/oder Plausibilitätsprüfungen.

Ferner kann vorgesehen sein, dass eine Person die Mobileinheit an ihrem Körper trägt, insbesondere an einer vorgegebenen Stelle ihres Körpers. Mithilfe eines Sensors der Mobileinheit kann, insbesondere von der Auswerteeinheit, eine Blickrichtung der Person oder allgemein eine räumliche Ausrichtung eines Körperteils der Person ermittelt werden.

Es ist weiterhin möglich, eine Blickrichtung der Person beziehungsweise eine räumliche Ausrichtung eines Körperteils der Person mithilfe einer weiteren Mobileinheit zu ermitteln, welche die Person an einer anderen Stelle ihres Körpers trägt. So kann z.B. eine Ist-Position der weiteren Mobileinheit ermittelt werden. Anhand der Ist-Position der weiteren Mobileinheit wiederum kann die Blickrichtung beziehungsweise die räumliche Ausrichtung ermittelt werden.

Anhand der ermittelten Positionsinformation kann, insbesondere von der Auswerteeinheit, eine Relativposition der Mobileinheit bezüglich ihrer Soll-Position ermittelt werden. Unter der Soll-Position der Mobileinheit kann ihre vorgesehene Position im Bezugsraum verstanden werden. Die Soll-Position kann z.B. in der Auswerteeinheit hinterlegt sein.

Vorteilhafterweise werden auf einer Ausgabeeinheit der Mobileinheit optische und/oder akustische Lokalisierungsinformationen ausgegeben, welche von der Relativposition abhängig sind.

Die Soll-Position der Mobileinheit ist beispielsweise eine gewünschte Position einer in einer Wand zu montierenden Steckdose. Die Mobileinheit kann u.a. eine Wasserwaage umfassen. So kann nun beispielsweise die Wasserwaage so weit in eine angezeigte Richtung bewegt werden, bis eine Markierung der Wasserwaage an der Sollposition liegt. Dort kann nun die Steckdose in der Wand montiert werden. Allgemein gesprochen wird zweckmäßigerweise eine Position der Mobileinheit von einer Person unter Beachtung der Lokalisierungsinformationen solange verändert, bis auf der Ausgabeeinheit der Mobileinheit eine Meldung ausgegeben wird, dass die Position der Mobileinheit der Soll-Position entspricht, oder anhand der Lokalisierungsinformationen feststellbar ist, wo die Soll-Position relativ zur Mobileinheit liegt.

Eine besonders vorteilhafte Anwendung der Erfindung liegt in der Lokalisierung einer Person. Hierzu trägt diese vorzugweise die Mobileinheit an einer vorgegebenen Stelle ihres Körpers. Die Mobileinheit kann insbesondere an einem vorgegebenen Kleidungsstück befestigt und/oder auf einem vorgegebenen Körperteil der Person aufgesetzt sein.

Die Erfindung kann weiterhin u.a. im Bereich des Sports, insbesondere des Ballsports, eine Anwendung finden. In solch einem Fall kann der Bezugsraum beispielsweise ein Fußballfeld, ein Tennisplatz oder dergleichen sein. Die Mobileinheit kann z.B. in einem Ball, insbesondere in einem Tennisball, einem Fußball oder dergleichen, angeordnet sein. Während eines Ballsportspiels kann, insbesondere von der Auswerteeinheit, anhand der ermittelten Positionsinformation eine Relativposition eines Teilnehmers des Ballsportspiels bezüglich des Balls ermittelt werden. Zweckmäßigerweise trägt der Teilnehmer des Ballsportspiels zu diesem Zweck eine andere Mobileinheit an seinem Körper, deren Ist-Position vorteilhafterweise ermittelt wird. Die Relativposition des Teilnehmers bezüglich des Balls kann anhand der Ist-Position der erstgenannten und der Ist-Position der anderen Mobileinheit ermittelt werden.

Die Erfindung kann ferner in anderen Bereichen Anwendung finden, wie z.B. in einem Theater und/oder in einem Museum. In solch einem Fall kann der Bezugsraum beispielsweise ein Bühnenraum oder ein Museumsraum sein. Als Bühnenraum kann ein durch eine Bühnenplattform einer Theaterbühne, einer Opernbühne oder dergleichen definierter Raum aufgefasst werden kann.

Unter anderem kann von einem Beleuchtungssystem in Abhängigkeit von der ermittelten Positionsinformation mindestens eine vorgegebene Aktion ausgeführt werden, insbesondere eine räumliche Ausrichtung, eine Lichtstärke und/oder ein Aperturdurchmesser einer Beleuchtungseinrichtung verändert werden. Hierbei ist es vorteilhaft, wenn eine Person die Mobileinheit an ihrem Körper trägt. Auf diese Weise kann erreicht werden, dass das Beleuchtungssystem die vorgegebene Aktion implizit in Abhängigkeit von einer Ist-Position der Person durchführt. Anstelle der Person kann ein Versatzstück verwendet werden, also ein Gegenstand, der auf einer Bühne bewegt wird, wobei im Folgenden der Einfachheit halber nur eine Person beschrieben ist, die Beschreibung jedoch auch auf ein Versatzstück anwendbar ist.

Ferner kann von einem Audiosystem in Abhängigkeit von der ermittelten Positionsinformation mindestens eine vorgegebene Aktion ausgeführt werden. Die vorgegeben Aktion kann z.B. eine Veränderung einer räumliche Ausrichtung eines Lautsprechers verändert werden und/oder einer Lautstärke eines Lautsprechers umfassen. Außerdem kann die vorgegebene Aktion ein Abspielen einer vorgegebenen Tonsequenz umfassen. Hierbei ist es vorteilhaft, wenn eine Person die Mobileinheit an ihrem Körper trägt. Auf diese Weise kann erreicht werden, dass das Audiosystem die vorgegebene Aktion implizit in Abhängigkeit von einer Ist-Position der Person durchführt.

Darüber hinaus kann vorgesehen sein, dass von einem Kamerasystem in Abhängigkeit von der ermittelten Positionsinformation eine vorgegebene Aktion durchgeführt wird. Es kann z.B. eine Ausrichtung einer Kamera des Kamerasystems derart verändert werden, dass sich eine Person in einem Blickfeld der Kamera befindet. Auch in einem Anwendungsfall ist es vorteilhaft, wenn die Person die Mobileinheit an ihrem Körper trägt.

Weiterhin ist es möglich, dass das Beleuchtungssystem, das Audiosystem und/oder das Kamerasystem seine jeweilige Aktion in Abhängigkeit von einer Blickrichtung der Person beziehungsweise allgemeiner von einer räumlichen Ausrichtung eines Körperteils der Person durchführt. Die Blickrichtung kann dabei wie oben beschrieben ermittelt werden.

Ferner kann eine Basis- oder Mobileinheit in einem Lautsprecher des Audiosystems, in einer Beleuchtungseinrichtung des Beleuchtungssystems oder in einer Kamera eines Kamerasystems angeordnet sein. Zweckmäßigerweise wird eine Ist-Position dieser weiteren Einheit ermittelt, insbesondere wie oben beschrieben. In Abhängigkeit von der Ist-Position der Einheit kann das Audiosystem, das Beleuchtungssystems oder das Kamerasystem mindestens eine vorgegebene Aktion durchführen.

In einer weiteren Erfindungsvariante kann die Mobileinheit in einem Markierungsgerät angeordnet sein. Das Markierungsgerät kann u.a. eine bewegliche Projektionseinheit aufweisen. Vorzugsweise richtet sich die Projektionseinheit in Abhängigkeit von der ermittelten Positionsinformation aus. Darüber hinaus ist es vorteilhaft, wenn die Projektionseinheit ein Lichtmuster auf eine Fläche projiziert. Durch das Lichtmuster kann insbesondere eine Soll-Position eines Objekts auf der Fläche, beispielsweise eine Soll-Position einer Steckdose an einer Wand, markiert werden. Die letztgenannte Soll-Position kann in der Auswerteeinheit hinterlegt sein.

Zweckmäßigerweise ist das Markierungsgerät derart angeordnet, dass es in einer vorgegebenen Weise zu besagter Fläche ausgerichtet ist. Alternativ ist es möglich, das Markierungsgerät in einer beliebigen Ausrichtung zur Fläche aufzustellen. In letzterem Fall kann das Markierungsgerät z.B. einen Sensor zur Ermittlung der Ausrichtung des Markierungsgeräts aufweisen. Auch ist es möglich, dass im Markierungsgerät eine zusätzliche Mobileinheit angeordnet ist, deren Ist-Position z.B. ermittelt werden kann, um die Ausrichtung des Markierungsgeräts zu ermitteln.

Das Markierungsgerät kann tragbar sein. Vorzugweise bleibt das Markierungsgerät während der Ermittlung der Positionsinformation und insbesondre während der Projektion des Lichtsignals in einer fixen Position.

Gemäß einer vorteilhaften Weiterbildung der Erfindung werden die Ist-Positionen einer vorgegebenen Anzahl von Basiseinheiten ermittelt, vorzugsweise wie zuvor beschrieben.

Um eine Platzierung einer der Basiseinheiten zu überprüfen, ist es vorteilhaft, der Basiseinheit eine Soll-Position zuzuordnen. Diese Soll-Position kann ein bekannter Bezugspunkt oder eine vorgegebene Relativposition sein und ist vorzugsweise in der Auswerteeinheit hinterlegt. Die Positionen von Bezugspunkten können beispielsweise in einem Bauplan festgelegt werden, z.B. in Ecken eines Raumes. Mithilfe des oben beschriebenen Verfahrens ist es nun möglich zu überprüfen, ob die jeweilige Basiseinheit in ihrer Soll-Position angeordnet ist.

Zudem kann, insbesondere von der Auswerteeinheit, anhand der Ist-Position von Basiseinheiten geprüft werden, ob sie in derjenigen geometrischen Beziehung zueinander angeordnet sind, in der die gleiche Anzahl von vorbestimmten Bezugspunkten zueinander liegen. Die Lage kann eine absolute Lage im Ortsraum sein, die durch geostationäre Koordinaten bestimmt ist, oder eine relative Lage zueinander. Weiter kann die geometrische Beziehung der Auswerteeinheit hinterlegt sein und/oder von der Auswerteeinheit berechnet werden. Zweckmäßigerweise wird eine vom Ergebnis der Prüfung abhängige Meldung erzeugt. Die Meldung kann eine Fehlermeldung umfassen, insbesondere wenn die Mobileinheiten nicht gemäß der vorbestimmten geometrischen Beziehung zueinander angeordnet sind. Weiter ist es zweckmäßig, wenn die Meldung ausgegeben wird, insbesondere auf der Auswerteeinheit und/oder auf einem mobilen Endgerät.

In einer vorteilhaften Ausgestaltung der Erfindung wird mindestens ein Abstand zwischen zwei der Einheiten ermittelt, z.B. durch eine Signallaufzeitmessung eines oder mehrerer zwischen den Einheiten ausgetauschter Signale. Der Abstand kann insbesondere anhand einer Zeitdauer, die von einer Zeitdifferenz zwischen einem Sendezeitpunkt des jeweiligen Signals und einem Empfangszeitpunkt desselben Signals abhängig ist, ermittelt werden.

Als Sendezeitpunkt eines Signals kann derjenige Zeitpunkt aufgefasst werden, an dem ein vorbestimmter Signalteil von der jeweiligen signalversendenden Einheit versendet wird, beispielweise ein vorbestimmtes Bit oder eine vorbestimmte Sequenz eines Frames, wie beispielsweise ein Frame-Marker. Entsprechend kann als Empfangszeitpunkt eines Signals derjenige Zeitpunkt aufgefasst werden, an dem der vorbestimmte Signalteil von der jeweiligen signalempfangenden Einheit empfangen wird.

Für die Ausgestaltung der Signale für die Laufzeitmessung gibt es verschiedene Möglichkeiten. Generell kann ein Signalaustausch erfolgen, also ein Hin- und ein Rücksignal zwischen zwei Einheiten. Ist eine Latenzzeit, bekannt, also die Zeit zwischen dem Empfangszeitpunkt und dem Sendezeitpunkt in einer Einheit, so kann die Laufzeit in einfacher Weise bestimmt werden.

Auf einen Signalaustauch kann verzichtet werden, wenn das Signal einen Zeitstempel trägt, z.B. der Sendezeitpunkt, und die Einheiten synchronisiert sind. In diesem Fall verfügen zweckmäßigerweise zumindest die Basiseinheiten über Zeitgeber. Beispielsweise wird von einer der Einheiten ein Signal mit Zeitstempel versendet, welches von zumindest einer anderen Einheit empfangen wird, sodass diese nun den Abstand zum Sender kennen.

Einzelne oder alle der Signale, die von den Einheiten versendet werden, können jeweils eine Kennung umfassen, welche der jeweiligen signalversendenden Einheiten eindeutig zugeordnet werden kann.

Um Signalkollisionen zu vermeiden, können die Einheiten verschiedene vorbestimmte Latenzzeiten aufweisen. Hierbei wird zweckmäßigerweise auf eine Signalverarbeitungslatenzzeit eine Verzögerungslatenzzeit aufaddiert. Die Latenzzeit, also der Zeitraum zwischen dem Signalempfang und dem Senden des vom Signalempfang verursachten Sendesignals, setzt sich also zusammen aus einer Latenz wegen einer Verarbeitungszeit, die das Empfangen, Verarbeiten und Senden benötigt, und einer zusätzlichen Latenz durch eine Verzögerungszeit, die zweckmäßigerweise voreingestelltund einer Auswerteeinheit bekannt ist und das Senden des Sendesignals um die eingestellte Verzögerungszeit verzögert.

Nun sendet jede der antwortenden Einheiten ihr Signal zeitversetzt zu den Signalen der anderen antwortenden Einheiten. Es ist auch möglich, dass eine Anfrage adressiert ist und nur die adressierte Einheit antwortet. Die Latenzzeiten können hierbei alle gleich sein.

Bei Einsatz der Zeitstempelmethode enthalten einzelne oder alle der Signale, die von den Einheiten versendet werden, einen Zeitstempel. Der Zeitstempel kann eine Information bezüglich eines Sendezeitpunkts des jeweiligen Signals umfassen.

Besonders bevorzugt ist es, wenn mehrere Abstände, insbesondere alle Abstände, zwischen mehreren Einheiten, ermittelt werden. Anhand der Abstände kann eine Platzierung der Basiseinheiten bezüglich ihrer Soll-Positionen geprüft werden. Vorteilhafterweise wird, insbesondere von der Auswerteeinheit, anhand der Abstände zwischen den Basiseinheiten geprüft, ob die Basiseinheiten in derjenigen geometrischen Beziehung zueinander angeordnet sind, in der eine gleiche Anzahl von vorbestimmten Bezugspunkten zueinander liegen. Zweckmäßigerweise wird eine vom Ergebnis dieser Prüfung abhängige Meldung erzeugt. Ferner ist es zweckmäßig, wenn diese Meldung ausgegeben wird, insbesondere auf der Auswerteeinheit und/oder auf einem mobilen Endgerät.

Weiter kann vorgesehen sein, dass mehrere oder alle Einheiten ein Signal versenden, welches von den anderen Einheiten der Gruppe empfangen wird. Für jedes Antwortsignal, welches die jeweilige anfragesignalversendende Einheit zu ihrem Anfragesignal von den anderen Einheiten empfängt, kann eine Zeitdifferenz zwischen einem Sendezeitpunkt des jeweiligen Anfragesignals und einem Empfangszeitpunkt des zum jeweiligen Anfragesignal versandten Antwortsignal ermittelt werden. Anhand der Zeitdifferenzen wiederum können die Abstände zwischen der jeweiligen anfragesignalversendenden Einheit und der jeweiligen antwortsignalversendenden Einheit ermittelt werden.

Durch die Ermittlung der Abstände der Einheiten zueinander können die Positionen der Einheiten in einer Ebene zueinander bestimmt werden. Ist beispielsweise eine Position von zumindest zwei der Einheiten zu einer Referenzposition beziehungsweise einem bekannten Bezugspunkt bekannt, so kann auch die Position einer dritten Einheit zur Referenzposition einfach bestimmt werden.

In einer vorteilhaften Ausgestaltung der Erfindung werden Positionsinformationen, beispielsweise Abstände, welche die Einheiten zueinander aufweisen, von zumindest einer der Einheiten selbst anhand der Laufzeitgröße, beispielsweise der Signallaufzeiten, also der Zeitdifferenz zwischen einem Sendezeitpunkt des jeweiligen Signals und einem Empfangszeitpunkt desselben Signals, ermittelt. Diese können an die Auswerteeinheit übermittelt werden. Alternativ oder zusätzlich können die Positionsinformationen von der Auswerteeinheit anhand der übermittelten Laufzeitgrößen ermittelt werden.

Die zuvor erwähnten Signale können insbesondere Funksignale sein. Grundsätzlich kann die Übertragung der Signale kabelgebunden öder drahtlos, insbesondere unter Verwendung einer Ultra-Breitband-Technologie, erfolgen.

Die Erfindung ist außerdem auf ein Positionssystem gerichtet. Erfindungsgemäß umfasst das Positionssystem eine Mobileinheit, zumindest zwei Basiseinheiten und eine Auswerteeinheit zum Ermitteln einer Position der Mobileinheit relativ zu den Basiseinheiten, bei dem eine der Einheiten dazu vorbereitet ist, zumindest ein Signal auszusenden, und die Auswerteeinheit dazu vorbereitet ist, aus einer Laufzeitgröße, die von der Laufzeit des Signals zu zumindest einer der anderen Einheiten abhängig ist, eine Positionsinformation zu bestimmen und aus zumindest zwei in dieser Weise bestimmten Positionsinformationen die Position der Mobileinheit zu bestimmen.

Das Positionssystem ermöglicht eine kostengünstige Ermittlung einer Positionsinformation. Vorzugsweise ist das Positionssystem zur Durchführung des oben beschriebenen Verfahrens eingerichtet. Ferner können im Zusammenhang mit oben beschriebenen Verfahren genannte, gegenständliche Elemente Bestandteil des Positionssystems sein.

Die Auswerteeinheit kann als stationäres Gerät mit einer unveränderten, bekannten Position, oder als mobiles Endgerät, beispielsweise als Laptop, Tablet-PC oder dergleichen, ausgestaltet sein. Darüber hinaus kann die Auswerteeinheit eine Ausgabeeinheit aufweisen, beispielsweise zum Anzeigen von Bauplänen. Ferner kann die Auswerteeinheit eine Kamera umfassen, welche z.B. für eine Baudokumentation verwendet werden kann.

Darüber hinaus kann die Auswerteeinheit dazu eingerichtet sein, anhand der Positionsinformation die Ist-Position der Mobileinheit zu ermitteln. Weiter kann die Auswerteeinheit ein Element der Basiseinheit oder Mobileinheit sein. Ferner ist es möglich, dass die Auswerteeinheit ein separates Element ist.

Die bisher gegebene Beschreibung vorteilhafter Ausgestaltungen der Erfindung enthält zahlreiche Merkmale, die in einigen abhängigen Ansprüchen zu mehreren zusammengefasst wiedergegeben sind. Diese Merkmale können jedoch zweckmäßigerweise auch einzeln betrachtet und zu sinnvollen weiteren Kombinationen zusammenfasst werden, insbesondere bei Rückbezügen von Ansprüchen, so dass ein einzelnes Merkmal eines abhängigen Anspruchs mit einem einzelnen, mehreren oder allen Merkmalen eines anderen abhängigen Anspruchs kombinierbar ist. Außerdem sind diese Merkmale jeweils einzeln und in beliebiger geeigneter Kombination sowohl mit dem erfindungsgemäßen Verfahren als auch mit der erfindungsgemäßen Vorrichtung gemäß den unabhängigen Ansprüchen kombinierbar. So sind Verfahrensmerkmale auch als Eigenschaft der entsprechenden Vorrichtungseinheit gegenständlich formuliert zu sehen und funktionale Vorrichtungsmerkmale auch als entsprechende Verfahrensmerkmale.

Die oben beschriebenen Eigenschaften, Merkmale und Vorteile dieser Erfindung, sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden. Die Ausführungsbeispiele dienen der Erläuterung der Erfindung und beschränken die Erfindung nicht auf die darin angegebene Kombination von Merkmalen, auch nicht in Bezug auf funktionale Merkmale. Außerdem können dazu geeignete Merkmale eines jeden Ausführungsbeispiels auch explizit isoliert betrachtet, aus einem Ausführungsbeispiel entfernt, in ein anderes Ausführungsbeispiel zu dessen Ergänzung eingebracht und/oder mit einem beliebigen der Ansprüche kombiniert werden.

Es zeigen:

FIG 1   einen Raum, in dem sich ein Handwerker befindet und ein Positionssystem angeordnet ist;

FIG 2   eine schematische geometrische Darstellung einer Mobileinheit relativ zu zwei Basiseinheiten;

FIG 3   eine schematische geometrische Darstellung einer Mobileinheit relativ zu drei Basiseinheiten;

FIG 4   eine schematisches Sendediagramm von Signalen von einer Mobileinheit über Basiseinheiten zu einer Auswerteeinheit;

FIG 5   eine Bühne, auf welcher sich ein Darsteller befindet und ein anderes Positionssystem angeordnet ist;

FIG 6   einen Museumsraum, in dem sich ein Museumsbesucher befindet und ein weiteres Positionssystem angeordnet ist; und

FIG 7   ein Fußballfeld, auf dem sich mehrere Fußballspieler befinden und noch ein weiteres Positionssystem angeordnet ist.

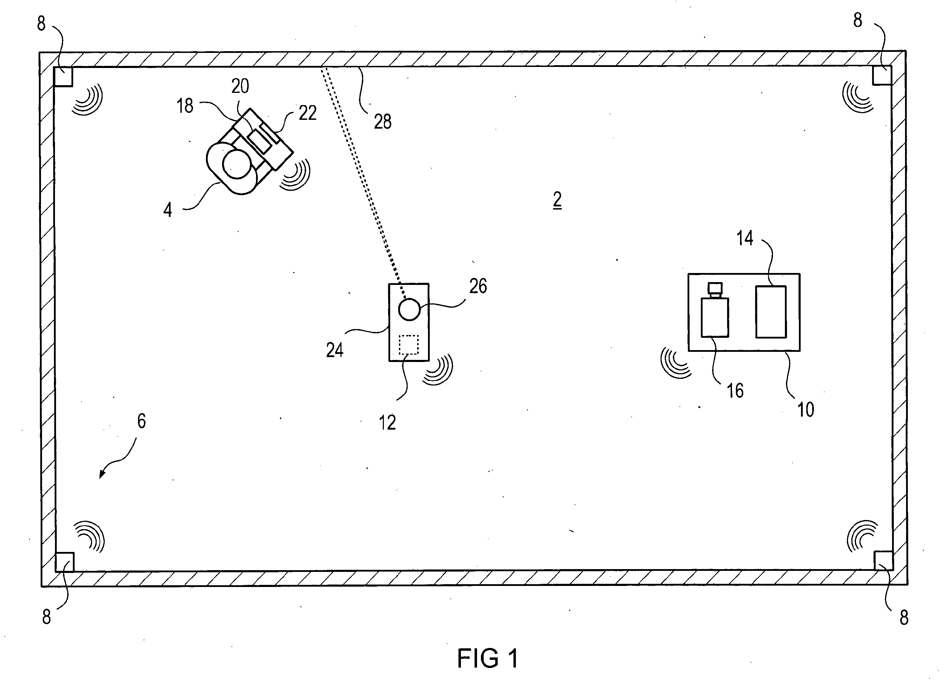

FIG 1 zeigt schematisch einen horizontalen Querschnitt eines Raums 2 eines Gebäudes. In dem Raum 2 befindet sich eine Person 4, bei der es sich im vorliegenden Ausführungsbeispiel um einen Handwerker handelt. Ferner ist im Raum 2 ein Positionssystem 6 angeordnet.

Das Positionssystem 6 umfasst unter anderem vier Basiseinheiten 8, die in vorgegebenen Bezugspunkten des Raums 2 platziert sind. Bei dem in FIG 1 gezeigten Ausführungsbeispiel sind die vier Bezugspunkte verschiedene Ecken des Raums 2. Grundsätzlich wären außer den Ecken auch andere Positionen des Raums 2 als Bezugspunkte möglich.

Darüber hinaus umfasst das Positionssystem 6 eine Auswerteeinheit 10. In der Auswerteeinheit 10 sind ein Bauplan des Raums 2 sowie Koordinaten der Bezugspunkte hinterlegt. Die Auswerteeinheit 10 umfasst eine Ausgabeeinheit 14 zur optischen Ausgabe von Informationen, welche als Touchdisplay ausgestaltet ist. Die Ausgabeeinheit 14 dient insbesondere auch als Bedieneinheit der Auswerteeinheit 10. Außerdem ist die Auswerteeinheit 10 mit einer beweglichen Kamera 16 ausgestattet, welche für eine Baudokumentation eingesetzt werden kann.

Des Weiteren umfasst das Positionssystem 6 eine Mobileinheit 18. Die Mobileinheit 18 umfasst ebenfalls eine Ausgabeeinheit 20. Zudem umfasst die Mobileinheit 18 eine Wasserwaage 22. In FIG 1 trägt die Person 4 die Mobileinheit 18 in ihren Händen.

Optionalerweise umfasst das Positionssystem 6 ein Markierungsgerät 24, in welchem ebenfalls eine zusätzliche Mobileinheit 12 angeordnet ist und das eine bewegliche Projektionseinheit 26 umfasst.

Die vier Basiseinheiten 8 sind dazu eingerichtet, untereinander sowie mit der Auswerteeinheit 10 drahtlos, insbesondere mittels Funkwellen, Daten auszutauschen.

Um die Position einer Mobileinheit, in diesem Ausführungsbeispiel die Mobileinheit 12, 18, aus ihrer Relativposition zu Basiseinheiten, hier Basiseinheiten 8, zu bestimmen, ist es sinnvoll, die Positionen der Basiseinheiten im Raum zu kennen. Dies kann geschehen, indem Basiseinheiten gezielt an bekannten Positionen platziert werden, oder indem die Positionen der Basiseinheiten bestimmt werden. Die Positionsbestimmung der Basiseinheiten kann unabhängig von der Bestimmung der Position der Mobileinheit geschehen.

Eine Möglichkeit zur Positionsbestimmung der Basiseinheiten besteht in der Verwendung von Signallaufzeiten zwischen Einheiten, z. B. zwischen Basiseinheiten untereinander, zwischen Basiseinheiten und einer Mobileinheit, und/oder zwischen Basiseinheiten und einer Auswerteeinheit.

In dem Ausführungsbeispiel als FIG 1 wird von einer, mehreren oder allen der vier Basiseinheiten 8 zu unterschiedlichen Zeitpunkten ein Anfragesignal versendet, welches von den jeweils anderen Basiseinheiten 8 empfangen wird. Das Anfragesignal enthält einen ID-Code der sendenden Basiseinheit, insbesondere eine Netzwerkadresse, beispielsweise eine MAC-Adresse oder eine IP-Adresse.

Weiter wird von jeder der vier Basiseinheiten 8 eine vorgegebene Latenzzeit nach einem Empfangszeitpunkt, an dem die jeweilige Basiseinheit 8 ein Anfragesignal empfängt, ein Antwortsignal versendet, insbesondere adressiert an die jeweilige anfragesignalversendende Basiseinheit 8. Um eine Signalkollision zu vermeiden, kann jede der Basiseinheiten 8 eine von Basiseinheit 8 zu Basiseinheit 8 verschiedene Verzögerungslatenzzeit aufweisen, die in jeder Basiseinheit 8 jedoch fest eingestellt beziehungsweise vorgegeben sein kann. Das Antwortsignal enthält einen ID-Code der sendenden Basiseinheit, beispielsweise eine MAC-Adresse. Für jedes Antwortsignal, welches die anfragesignalversendende Basiseinheit 8 zu ihrem Anfragesignal empfängt, ermittelt sie eine Laufzeitgröße, nämlich den Empfangszeitpunkt.

Nun versendet die anfragesignalversendende Basiseinheit 8 ein Datensignal an die Auswerteeinheit 10, das den ID-Code der anfragesignalversendende Basiseinheit 8, den ID-Code der antwortsignalversendende Basiseinheit 8, den Sendezeitpunkt des Anfragesignals und den Empfangszeitpunkt des Antwortsignals enthält. Dies geschieht in gleicher Weise für alle Antwortsignale, so dass n - 1 Datensignale, also drei Datensignale pro anfragesignalversendende Basiseinheit 8, an die Auswerteeinheit 10 gesendet werden.

Die Auswerteeinheit 10 ermittelt als weitere Laufzeitgröße eine Zeitdifferenz zwischen dem Sendezeitpunkt des Anfragesignals und dem Empfangszeitpunkt des jeweiligen Antwortsignals. Es ist ebenfalls möglich, dass die Zeitdifferenz bereits in der anfragesignalversendende Basiseinheit 8 ermittelt wird und dann diese per Funkwellen an die Auswerteeinheit 10 weitergegeben wird. Die Auswerteeinheit 10 ermittelt aus den Zeitdifferenzen unter Abzug der vorbestimmten und ihr bekannten Latenzzeiten der jeweiligen antwortsignalversendenden Basiseinheit 8 die Laufzeiten der Signale und daraus die Abstände, welche die drei Basiseinheiten 8 zur anfragesignalversendenden Basiseinheit 8 haben. Jeder Abstand ist eine Positionsinformation, aus der die Relativpositionen der Basiseinheiten 8 zueinander bestimmt werden, beispielsweise in der Auswerteeinheit 10. Dieser Prozess kann nun von zumindest einer anderen anfragesignalversendenden Basiseinheit 8 wiederholt werden, so dass alle Relativabstände der Basiseinheiten 8 zueinander bekannt sind.

Grundsätzlich ist es auch möglich, dass die Basiseinheiten 8 selbst anhand der von ihnen ermittelten Zeitdifferenzen ihre Abstände zueinander ermitteln. In solch einem Fall kann darauf verzichtet werden, dass die Basiseinheiten 8 die Zeitdifferenzen zur Auswertung an die Auswerteinheit 10 übermitteln.

Anhand der Abstände und/oder Relativpositionen kann die Auswerteeinheit 10 nun prüfen, ob die Ist-Positionen der Basiseinheiten 8 in der gleichen vorbestimmten geometrischen Beziehung zueinander stehen, wie in der Auswerteeinheit 10 hinterlegte Bezugspunkte. Die geometrische Beziehung der Bezugspunkte kann die Auswerteeinheit 10 anhand des in der Auswerteeinheit 10 hinterlegten Bauplans ermitteln. Die geometrische Beziehung der Bezugspunkte zueinander kann sich unabhängig von einer bestimmen Anwendung auch aus einem vorhergehenden Ermittlungsverfahren ergeben haben. Wurden nun eine oder mehrere Positionen einer beziehungsweise mehrerer der Basiseinheiten 8 verändert, so fällt dies durch den Vergleich mit der aktuellen geometrischen Beziehung auf. Die geometrische Beziehung kann die relative Anordnung der Basiseinheiten 8 beziehungsweise der Bezugspunkte zueinander sein.

Sind die geometrischen Beziehungen gleich beziehungsweise liegen sie innerhalb eines Toleranzbandes zueinander, so sind die Basiseinheiten 8 vermutlich korrekt, beziehungsweise wie vorher, positioniert. Es wäre zwar möglich, dass alle Basiseinheiten 8 in gleicher Weise relativ zum Raum 2 verschoben sind, ohne dass dies anhand des Beziehungsvergleichs auffiele, doch dies ist eher unwahrscheinlich.

Je nach Anwendung kann die Auswerteinheit 10 eine von einem Ergebnis der Prüfung abhängige Meldung erzeugen und auf seiner Ausgabeeinheit 14 ausgeben. Sind die geometrischen Beziehungen nicht ausreichend gleich, so umfasst die Meldung eine Fehlermeldung oder Änderungsmeldung. Der Bediener kann die Meldung quittieren, z.B. wenn die Änderung in Ordnung ist. Oder er platziert nun eine oder mehrere der Basiseinheiten 8 neu und startet den Vergleich durch eine Eingabe an der Auswerteeinheit 10 neu. Sind die geometrischen Beziehungen trotz korrekter Platzierung nicht ausreichend gleich, so ist dies ein Hinweis darauf, dass die realen Bezugspunkte, also in diesem Ausführungsbeispiel die Ecken des Raums 2, nicht bauplangemäß ausgeführt sind. Hierdurch können Baufehler aufwandsgünstig erkannt werden. Die hinterlegten Bezugspunkte können nun vom Bediener neu hinterlegt werden, z.B. an die Positionen der realen Ecken angeglichen werden.

Nach einer Erkennung einer Veränderung des Basissystems kann die Auswerteeinheit 10 eine Neuvermessung der Basiseinheiten 8 zueinander initiieren. Es kann hierdurch ein neu kalibriertes Basissystem aus dem Basiseinheiten 8 erstellt werden, deren neue Positionen zueinander bekannt sind auf Grundlage derer nun die Positionsbestimmung der Mobileinheit 12, 18 erfolgt.

Im Vorangegangenen wurde beschrieben, wie ausschließlich die Positionen von Basiseinheiten 8 zueinander bestimmt werden. Dieses Vorverfahren dient zur Festlegung eines Referenzsystems, wie eines Referenzkoordinatensystems, relativ zu dem die Position der Mobileinheit 12, 18 nun bestimmt werden kann. Es ist jedoch auch möglich, dass eine der Basiseinheiten 8 als Mobileinheit bezeichnet wird, deren Position relativ zu den anderen Basiseinheiten 8 bestimmt wird. Beispielsweise wird eine anfragesignalversendende Basiseinheit 8 als Mobileinheit bezeichnet, deren Position relativ zu den anderen Basiseinheiten 8 dann bestimmt wird.

Im Folgenden kann nun die Position einer Mobileinheit bestimmt werden, beispielsweise der Mobileinheit 12, 18. Hierfür sind mehrere Verfahren möglich, die teilweise identisch und teilweise verschieden voneinander sind. Im Folgenden sind vier solche Verfahren beschrieben.

Das erste Verfahren ist analog zu dem oben beschriebenen Vorverfahren. Die Mobileinheit 12, 18 sendet ein Signal, also ein Anfragesignal, im Folgenden auch allgemein als Referenzsignal bezeichnet, zu einem Sendezeitpunkt aus, das die Basiseinheiten 8 empfangen. Diese senden ein Antwortsignal nach vorbestimmter Latenzzeit zurück - die Latenzzeiten könnten von Basiseinheit 8 zu Basiseinheit 8 durch Verzögerungslatenzzeiten verschieden sein - und die Mobileinheit 12, 18 oder die Auswerteeinheit 10 berechnen die Abstände der Mobileinheit 12, 18 zu den Basiseinheiten 8, wie oben beschrieben. Die Laufzeit der einzelnen Signale oder Signalpaare dient hierbei als Laufzeitgröße und die Abstände als Positionsinformationen. Aus den vorbekannten Positionen der Basiseinheiten 8 zueinander wird die Position der Mobileinheit 12, 18 bestimmt.

Der Signalaustausch zwischen den Basiseinheiten 8 kann in einem zweiten Verfahren vereinfacht werden, wenn anstelle des beschriebenen Latenzzeitverfahrens ein Zeitstempelverfahren verwendet wird. Hierbei weisen die Einheiten 8, 12, 18 jeweils eine Uhr auf, was beim ersten Verfahren nicht notwendig ist. Die Uhren sind miteinander synchronisiert. Dann kann das Referenzsignal, das von zumindest einer der Einheiten 8, 12, 18 versendet wird, einen Zeitstempel enthalten, welcher eine Information bezüglich eines Sendezeitpunkts des jeweiligen Signals umfasst. Die jeweilige empfangende Einheit 8, 12, 18 kann anhand ihrer Uhr aus dem Empfangszeitpunkt und dem Zeitstempel die Signallaufzeit bestimmen. Daraus kann, wie oben beschrieben, in einer der Einheiten 8, 10, 12, 18 die Position von beispielsweise der Mobileinheit 12, 18 bestimmt werden. Allgemein gesprochen bildet die Signallaufzeit die Laufzeitgröße, aus der die Positionsinformation wie im ersten Verfahren berechnet werden kann, und zwar von eine beliebigen Einheit 8, 10, 12, 18.

In jedem der Verfahren kann die Auswerteeinheit 10 ebenfalls als Einheit dienen und ein Anfragesignal und/oder Antwortsignal senden.

In einem dritten Verfahren reicht es aus, wenn die Basiseinheiten 8 jeweils eine synchronisiere Uhr enthalten. Die Mobileinheit 12, 18 sendet ein Referenzsignal aus und die Basiseinheiten 8 ermitteln jeweils ihren Empfangszeitpunkt des Referenzsignals. Die Empfangszeitpunkte beziehungsweise Empfangszeiten dienen als Laufzeitgröße und können in einer oder mehreren Basiseinheiten 8 oder vorzugsweise der Auswerteeinheit 10 weiterverarbeitet werden, der die Empfangszeiten von den Basiseinheiten 8 mitgeteilt werden.

Aus den Empfangszeiten von zwei der Basiseinheiten 8, im Folgenden als Einheitenpaar bezeichnet, wird die Zeitdifferenz zwischen den beiden Empfangszeitpunkten bestimmt. Auch diese kann als Laufzeitgröße dienen. Aus der Zeitdifferenz und den Positionen der Einheiten des Einheitenpaars wird nun eine Teilmenge des Ortsraums berechnet, in der sich die Mobileinheit 12, 18 befinden muss. Diese Teilmenge ist die Positionsinformation und kann eine Linie sein oder eine Fläche, also ein ein- oder zweidimensionales Gebilde im Raum, je nachdem, ob der Ortsraum zwei- oder dreidimensional ist. Messungenauigkeiten, die eine zusätzliche Dimension des Teilraums verursachen, sind zweckmäßigerweise zu berücksichtigen, werden hier jedoch zunächst vernachlässigt.

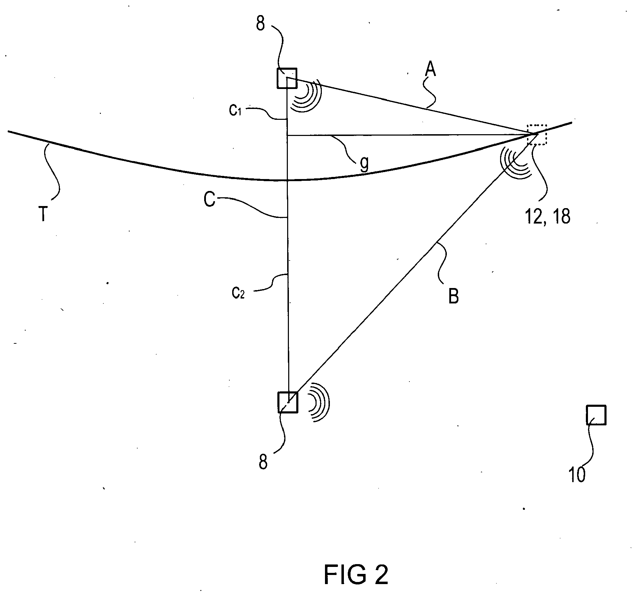

Die geometrische Beziehung der Mobileinheit 12, 18 mit den beiden Basiseinheiten 8, beispielsweise in Form eines Dreiecks, wird im Folgenden anhand von FIG 2 beschrieben.

FIG 2 zeigt zwei Basiseinheiten 8 und die Mobileinheit 12, 18. Die Einheiten 8, 12, 18 liegen in einem Dreieck mit den Seiten A, B und C zueinander. Die Positionen der Basiseinheiten 8 seien bekannt, so dass die Länge der Seite C, also die Strecke C, ebenfalls bekannt ist. Die Teilmenge T, innerhalb derer die Mobileinheit 12, 18 liegen muss, kann nun wie folgt berechnet werden.

Die Strecken A und B sowie die Stecke g, die als senkrechtes Lot auf C steht, sind unbekannt. Bekannt sind allerdings folgende vier Bedingungen:

(1) Die Streckendifferenz $D = B - A$ aus der Zeitdifferenz, aus der die Streckendifferenz $B - A$ mithilfe der Signalgeschwindigkeit, also der Lichtgeschwindigkeit, berechnet werden kann.

(2) Ebenfalls bekannt ist die Relation $c_1 + c_2 = C$, mit der bekannten Strecke C.

(3) Aus dem Satz von Pythagoras ergibt sich: $A^2 = c_1^2 + g^2$

(4) und: $B^2 = c_2^2 + g^2$.

Gesucht ist eine Funktion von beispielsweise der Strecke $c_2$ in Abhängigkeit von g, wie anhand der Kurve T in FIG 2 dargestellt ist:

$$c_2 = f(C, D, g),$$

mit C und D = const.

Diese Funktion ist abhängig von der Konstanten C, der Messgröße D und der unabhängigen Variablen g.

In einem ersten Rechenschritt folgt aus der Bedingung (2):

$$c_1{}^2 = (C - c_2)^2$$

Aus der Bedingung (3) folgt: $c_1{}^2 = A^2 - g^2$,
sodass sich ergibt: $C^2 - 2c_2C + c_2{}^2 = A^2 - g^2$.
Aus der Bedingung (1) folgt: $C^2 - 2c_2C + c_2{}^2 = (B - D)^2 - g^2$,
Sodas : $C^2 - 2c_2C + c_2{}^2 = B^2 - 2BD + D^2 - g^2$.
In Verbindung mit der Bedingung (4) ergibt sich daraus:

$$C^2 - 2c_2C + c_2{}^2 = c_2{}^2 + g^2 - 2BD + D^2 - g^2,$$

wobei durch Kürzung folgt: $C^2 - 2c_2C = -2BD + D^2$.
Nach B umgeformt ergibt sich: $2BD = D^2 + 2c_2C - C^2$, oder

$$B = c_2C/D + D/2 - C^2/2D.$$

Die bekannte Strecke C und die bekannte Messgröße D können substituiert werden mit $\delta := C/D$ und $\gamma := D/2 - C^2/2D$, so dass sich ergibt: $B = \delta c_2 + \gamma$.
In Verbindung mit der Bedingung (4) ergibt sich daraus:

$$c_2{}^2 + g^2 = \delta^2 c_2{}^2 + 2\delta\gamma c_2 + \gamma^2$$

oder umgeformt:

$$(1 - \delta^2)c_2{}^2 - 2\delta\gamma c_2 + g^2 - \gamma^2 = 0$$

Diese quadratische Gleichung kann in die Lösungsmenge überführt werden:

$$c_2 = \frac{\delta\gamma \pm \sqrt{\delta^2\gamma^2 - (1-\delta^2)(g^2 - \gamma^2)}}{1-\delta^2}.$$

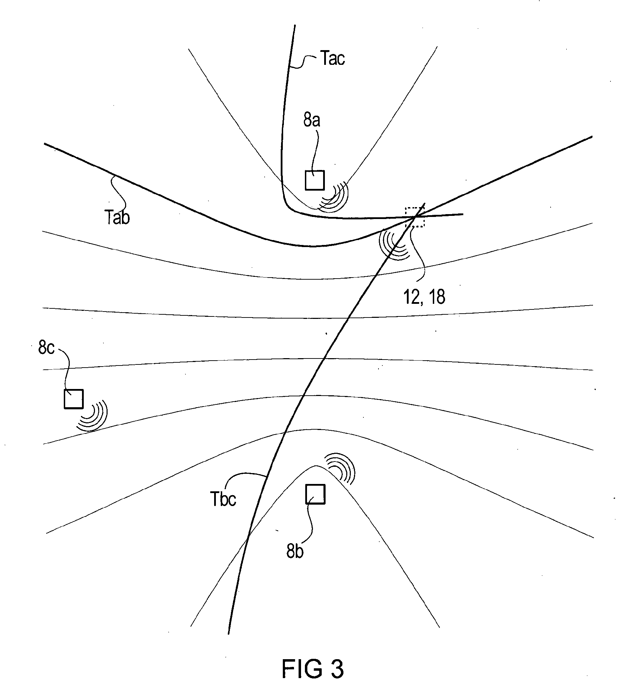

Aus dieser Gleichung sind $\delta = C/D$ und $\gamma = D/2 + C^2/2D$ bekannt und können unmittelbar eingesetzt werden. Insofern ergibt sich als Lösungsmenge eine Funktion $c_2 = f(g)$, wobei g als unabhängige Variable nicht bekannt ist. Durch die Unbekanntheit von g kann $c_2$ nicht als Wert bestimmt werden, sondern nur als Funktion, die eine Lösungsmenge bildet.
Diese Lösungsmenge ist die in FIG 2 dargestellte Teilmenge T in der sich die Mobileinheit 12, 18 befindet. Streng genommen umfasst die obige quadratische Gleichung zwei Teilmengen T, die als zueinander symmetrische Kurven ausgebildet sind, wie in FIG 3 in einem anderen Beispiel wiedergegeben ist. Die beiden Teilmengen T entstehen durch das Quadrieren im obigen ersten Rechenschritt, mit dem Effekt, dass Informationen verloren gehen und die Zeitdifferenz D nur noch als Betrag vorliegt. Ist die Zeitdifferenz nur als Betrag bekannt, liegen in der Tat jeweils zwei Lösungsfunktionen vor. Allerdings ist der Auswerteeinheit 10 auch das Vorzeichen der Zeitdifferenz D bekannt, so dass bekannt ist, ob die Teilmenge T näher an der einen oder anderen der Basiseinheiten 8 des Einheitspaars liegt. Von daher kann die aus der Gleichung resultierende doppelte Lösungsmenge auf eine einfache Teilmenge T. reduziert werden, wie in FIG 2 wiedergegeben ist.
Die Teilmenge T ist die Positionsinformation, die aus der Zeitdifferenz als Laufzeitgröße ermittelt wird. Im gezeigten Ausführungsbeispiel ist der gesamte Ortsraum eine zweidimensionale Fläche, z.B. ein Fußboden eines Raums oder einer Bühne.
Die Lösungsmenge beziehungsweise der Teilraum T ist bei $D \neq 0$ eine monoton gebogene Linie, also ein eindimensionaler Teilraum T. Bei $D = 0$ ist die obige Gleichung in der angegebenen Form zwar nicht lösbar, sie geht jedoch im Limes in eine Gerade über, die mittig zwischen den beiden Basiseinheiten 8 und senkrecht zu C liegt. Die Linie wird von der Strecke C also senkrecht geschnitten. Ist $D = C$, so ist die obige Gleichung ebenfalls nicht lösbar, wobei es jedoch unmittelbar klar ist, dass die Mobileinheit 12, 18 in einer Linie mit den beiden Basiseinheiten 8 liegen muss, so dass der Teilraum T eine Gerade durch die Basiseinheiten 8 ist.

FIG 3 zeigt beispielhaft eine Schar von Lösungsmengen T für verschieden angeordnete Mobileinheiten 12, 18, von denen der Übersichtlichkeit halber nur eine dargestellt ist. Die Schar ist in dünnen Linien gezeichnet, wobei die Lösungsmenge T, die durch die eingezeichnete Mobileinheit 12, 18 führt, dicker gezeichnet ist. Es ist zu erkennen, dass die Linien symmetrisch den beiden Basiseinheiten 8a und 8b verlaufen und im Limes gegen D = 0 in eine Gerade zwischen den Basiseinheiten 8a und 8b und im Limes gegen D = C in eine Gerade durch die Basiseinheiten 8a und 8b bilden, wobei auf die Darstellung dieser beiden Linien verzichtet wurde.

Weiter ist in FIG 3 eine dritte Basiseinheit 8c dargestellt so dass insgesamt drei Einheitenpaare vorliegen: 8a - 8b, 8a - 8c und 8b - 8c. Jedes Einheitenpaar bildet eine Laufzeitgröße beziehungsweise konkret in diesem Ausführungsbeispiel: eine Zeitdifferenz. Aus diesen wird jeweils eine Positionsinformation bestimmt, in diesem Ausführungsbeispiel der Teilraum T, beispielsweise von der Auswerteeinheit 10. In FIG 3 sind die drei resultierenden Teilräume Tab, Tac, Tbc durch jeweils dicke Linien dargestellt. Diese schneiden sich in der Position der Mobileinheit 12, 18 und geben damit deren Standort an.

Es wird also zu jedem Einheitenpaar eine Positionsinformation ermittelt. Bei drei vorhandenen Basiseinheiten 8 können drei Einheitenpaare gebildet werden und somit drei Positionsinformationen in Form eines Teilraums T berechnet werden. Bei dem Beispiel aus FIG 1 mit vier Basiseinheiten 8 können sechs Einheitenpaare gebildet werden und somit sechs verschiedene Positionsinformationen in Form eines Teilraums T berechnet werden.

Aus zumindest zwei Positionsinformationen wird die Position der Mobileinheit 12, 18 berechnet. Hierzu können die Positionsinformationen gleich gesetzt werden. Geometrisch werden sie hierbei geschnitten, und die Schnittmenge wird bestimmt. Dies ist bei einem zweidimensionalen Ortsraum und eindimensionalen Teilmengen T ein Schnittpunkt.

Ist der Ortsraum dreidimensional, so erfolgt die Bestimmung der Positionsinformation in analoger Weise, wobei die Funktion dann zusätzliche zur unabhängigen Variablen g eine weitere unabhängige Variable h hat, die in Polarkoordinaten ein Winkel sein kann oder in kartesischen Koordinaten eine Länge senkrecht zu g. Der resultierende Teilraum T ist für D ≠ 0 eine gekrümmte Fläche. Bei D = 0 ist es eine Ebene senkrecht zu C. Die Fläche ist eine Rotationsfläche um die Strecke C, die also von der Strecke C senkrecht geschnitten wird.

Bei einem dreidimensionalen Ortsraum und zweidimensionalen Teilmengen T wird aus zwei Positionsinformationen eine Schnittlinie und aus drei Positionsinformationen ein Schnittpunkt bestimmt, in dem die Mobileinheit 12, 18 angeordnet ist. Auf diese Weise wird die Position der Mobileinheit 12, 18 relativ zu den Basiseinheiten 8 bestimmt.

In einem vierten Verfahren kann auf eine zeitliche Synchronisation der Basiseinheiten 8 verzichtet werden. Es reicht aus, wenn diese lediglich dazu vorbereitet sind, ein Referenzsignal von der Mobileinheit 12, 18 zu empfangen und ein Antwortsignal an die Auswerteeinheit 10 weiterzusenden.

Die Mobileinheit 12, 18 sendet ein Referenzsignal aus, das zumindest zwei Basiseinheiten 8 empfangen und dieses als Trigger für ein Aussenden eines Antwortsignals an die Auswerteeinheit verwenden. Die Auswerteeinheit 10 erhält die Antwortsignale der Basiseinheiten 8, also in diesem Ausführungsbeispiel zwei Signale, und ermittelt den Eingangszeitpunkt der Antwortsignale bei sich. Aus der bekannten Position der Basiseinheiten 8 zur Auswerteeinheit 10 kann die Auswerteeinheit 10 den jeweiligen Absendezeitpunkt der Antwortsignale von den Basiseinheiten 8 ermitteln.

In einer ersten Variante des Verfahrens ist der Auswerteeinheit 10 eine Latenzzeit der Basiseinheiten 8 bekannt. Die Auswerteeinheit 10 ermittelt aus dem jeweiligen Absendezeitpunkt der Antwortsignale von den Basiseinheiten 8 und den Latenzzeiten der Basiseinheiten 8 den jeweiligen Empfangszeitpunkt des Referenzsignals von der Mobileinheit 12 oder 18 bei jeder Basiseinheit 8. Aus den Empfangszeitpunkten kann die Auswerteeinheit 10 die Zeitdifferenz D zwischen den einzelnen Empfangszeitpunkten bestimmen, so dass sie wie oben beschrieben den Teilraum T berechnet. Aus dem Schnittpunkt beziehungsweise Schnittraum mehrerer Teilräume T wird die Position der Mobileinheit 12, 18 bestimmt.

Die Latenzzeiten der Basiseinheiten 8 können von Basiseinheit 8 zu Basiseinheit 8 unterschiedlich oder gleich sein. Wichtig ist lediglich, dass der Auswerteeinheit 10 die Latenzzeiten bekannt sind. Um eine Signalkollision können die Latenzzeiten zusätzlich zur Signalverarbeitungslatenz jeweils eine voreingestellte Verzögerungslatenz beinhalten, wobei die Verzögerungslatenzen zweckmäßigerweise von Basiseinheit 8 zu Basiseinheit 8 verschieden sind. Der Auswerteeinheit 10 sind nun die Signalverarbeitungslatenz und die Verzögerungslatenz einer jeden Basiseinheit bekannt. In einem vereinfachten Verfahren sind der Auswerteeinheit 10 nur die Latenzzeiten einer jeden Basiseinheit bekannt, was zur Bestimmung der Teilräume ausreicht.

In einer zweiten Variante des Verfahrens weisen die Basiseinheiten 8 jeweils eine Uhr auf, was in der ersten Variante nicht notwendig ist. Die Uhren müssen nicht synchronisiert sein. Jede Basiseinheit 8 schickt zusätzlich zu dem Antwortsignal an die Auswerteeinheit 10 den Empfangszeitpunkt des Referenzsignals von der Mobileinheit 12, 18 bei der Basiseinheit 8 und den Sendezeitpunkt des Antwortsignals an die Auswerteeinheit 10. Alle Daten können gemeinsam in einem Antwortsignal an die Auswerteeinheit 10 geschickt werden. Aus dem Empfangszeitpunkt des Referenzsignals und dem Sendezeitpunkt des Antwortsignals kann die Auswerteeinheit die Latenzzeit einer jeden Basiseinheit 8 berechnen, so dass diese der Auswerteeinheit nicht bekannt und auch allgemein nicht vorbekannt sein muss.

Bei dem in FIG 3 dargestellten Ausführungsbeispiel sendet jede Basiseinheit 8 ein Antwortsignal ab, so dass drei Antwortsignale bei der Auswerteeinheit 10 eintreffen. Aus n Basiseinheiten 8 können somit 1 + 2 + ... + n-1 Zeitdifferenzpaare und daraus die gleiche Anzahl Positionsinformationen bestimmt werden.

Die Bestimmung der Position der Mobileinheit 12, 18 kann - mit jedem der vier Verfahren in gleicher Weise - zu verschiedenen vorteilhaften Zwecken verwendet werden.

Im vorliegenden Ausführungsbeispiel aus FIG 1 möchte die Person 4 ein Objekt in einer bekannten Soll-Position platzieren, beispielsweise eine Steckdose an eine Wand des Raums 2 anbringen. Eine Soll-Position der Steckdose ist aus dem Bauplan, der in der Auswerteeinheit 10 hinterlegt ist, bekannt. Wird bei der zuvor erwähnten Prüfung festgestellt, dass die Bezugspunkte nicht gemäß der vorbestimmten geometrischen Beziehung zueinander angeordnet sind, beispielsweise weil ein Baufehler vorliegt, kann die Person 4 die Soll-Position des Objekts anpassen oder die ursprüngliche Soll-Position weiterverwenden.

Nun möchte die Person 4, die Soll-Position des Objekts, im Folgenden stets vereinfacht als Steckdose bezeichnet, die ebenfalls als Bezugspunkt in der Auswerteeinheit 10 hinterlegt ist, auf einer Wandfläche 28 des Raums 2 lokalisieren. Hierzu verwendet die Person 4 die Mobileinheit 18.

Zum Zwecke der Lokalisierung der Soll-Position der Steckdose wird von der Auswerteeinheit 10 die Ist-Position der Mobileinheit 18, welche die Person 4 in ihren Händen trägt, ermittelt. Die Ist-Position der Mobileinheit 18 kann mit einem der beschriebenen Verfahren ermittelt werden.

Falls eine der Basiseinheiten 8 ihren Funkkontakt zur Auswerteeinheit 10 verliert, sendet sie ihr Datensignal mit z.B. dem Empfangszeitpunkt, der im Referenzsignal enthaltenen Kennung der Mobileinheit 12, 18, ihre eigene Kennung und einen im Referenzsignal enthaltenen Zählwert an eine oder mehrere der anderen Basiseinheiten 8, welche diese Informationen an die Auswerteeinheit 10 weiterleiten. Auf diese Weise stehen der Auswerteeinheit 10 die Informationen aller Basiseinheiten 8 zur Ermittlung der Ist-Position der Mobileinheit 12, 18 zur Verfügung.

Sinnvollerweise versendet die Mobileinheit 12, 18 wiederholt ein solches Referenzsignal, sodass bei jedem Versenden eines Referenzsignals von der Auswerteeinheit 10 die jeweilige Ist-Position der Mobileinheit 12, 18 ermittelt werden kann.

Auf der Ausgabeeinheit 20 der Mobileinheit 18 werden optische und/oder akustische Lokalisierungsinformationen ausgegeben, welche von der Relativposition abhängig sind und die Person 4 darüber informieren, in welcher Richtung und insbesondere in welchem Abstand sich die Soll-Position der Steckdose - von der Mobileinheit 18 aus betrachtet - befindet.

Die Person verändert eine Position der Mobileinheit 18 gemäß den Lokalisierungsinformationen, bis auf der Ausgabeeinheit 20 der Mobileinheit 18 eine Meldung ausgegeben wird, dass die Position der Mobileinheit 18 der Soll-Position der Steckdose entspricht oder die Mobileinheit 18 einen vorgegeben Abstand zu der Soll-Position aufweist. Auf diesem Wege kann die Person 4 die Soll-Position der Steckdose aufwandsgünstig ermitteln. Zum Markieren der Soll-Position auf der Wandfläche 28 ist die Mobileinheit 18 mit einer Markierung ausgestattet, deren Position nun genau an der Soll-Position liegt.

Alternativ oder zusätzlich kann die Person 4 zum Lokalisieren der Soll-Position der Steckdose das Markierungsgerät 24 verwenden. Hierzu wird von der Auswerteeinheit 10 die Ist-Position der im Markierungsgerät 24 angeordneten zusätzlichen Mobileinheit 12 ermittelt - und zwar analog zu der oben beschriebenen Ermittlung besagter Ist-Position der Mobileinheit 18, welche die Person 4 trägt.

Anhand der Ist-Position der im Markierungsgerät 24 angeordneten zusätzlichen Mobileinheit 12 ermittelt die Auswerteeinheit 10 eine Relativposition, die das Markierungsgerät 24 bezüglich der Soll-Position auf der Wandfläche 28 aufweist. Die Auswerteeinheit 10 übermittelt dem Markierungsgerät 24 per Funk einen von der Relativposition abhängigen Steuerbefehl zur Ausrichtung der Projektionseinheit 26. Die Projektionseinheit 26 richtet sich gemäß dem Steuerbefehl aus und projiziert ein Lichtmuster auf die Wandfläche 28, welches die Soll-Position der Steckdose markiert.

Zur Bestimmung der Ausrichtung des Markierungsgeräts 24 im Raum 2 kann das Markierungsgerät 24 noch eine weitere Mobileinheit aufweisen, die zweckmäßigerweise möglichst weit beabstandet von ihrer anderen Mobileinheit 12 angeordnet ist. Anhand der Ist-Position dieser weiteren Mobileinheit, welche in analoger Weise ermittelt werden kann, kann die Ausrichtung einfach ermittelt werden. Alternativ kann das Markierungsgerät 24 einen Sensor zur Ermittlung der Ausrichtung aufweisen. Solch ein Sensor kann z.B. einen Hall-Sensor zur Ermittlung der Erdmagnetfeldausrichtung umfassen und/oder ein Gyro oder INS (Inertialnavigationssystem) mit mehreren Beschleunigungssensoren. Weiterhin ist es möglich, dass das Markierungsgerät 24 von vornherein in einer vorgegebenen Weise zur Wandfläche ausgerichtet aufgestellt wird.

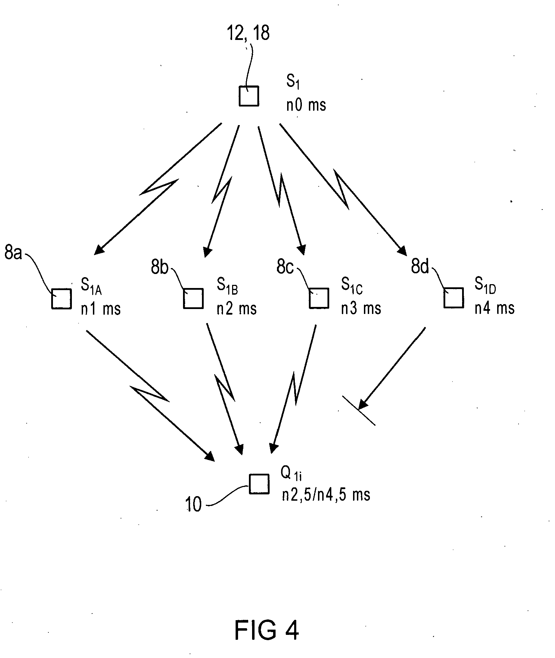

Je nach Positionierung oder Signalumfeld kann es vorkommen, dass Signale nicht empfangen werden können, beispielweise wenn ein Signalweg zu lang oder gestört ist. Oder ein Signal kann zwar empfangen aber nicht verstanden werden, z.B. wenn ein Signal nicht ausreichend gut beim Empfänger ankommt oder mit einem anderen Signal kollidiert. Zur Verbesserung eines solchen Signalverlusts sind die Basiseinheiten 8 zur Durchführung eines Signalhoppings vorbereitet, wie es beispielsweise in FIG 4 dargestellt ist.

FIG 4 zeigt ein schematisches Diagramm eines Aussendens eines Referenzsignals $S_1$ von der Mobileinheit

12, 18 zu den Basiseinheiten 8, in diesem Ausführungsbeispiel vier Basiseinheiten 8a bis 8d. Diese senden ihrerseits, beispielsweise nach dem obigen vierten Verfahren, ein Antwortsignal $S_{1i}$ an die Auswerteeinheit 10, die den korrekten Empfang der Antwortsignal $S_{1i}$ mit dem Quittiersignal $Q_{1i}$ quittiert.

Das Aussenden des Referenzsignals $S_1$ ist in diesem Ausführungsbeispiel getaktet mit einer Frequenz von beispielsweise 100 Hz. Durch das getaktete Aussenden des Referenzsignals $S_1$ wird dieses zu einem Zeitpunkt n0 ms gesendet, also in diesem Beispiel zu jeden vollen 10 Millisekunden. N ist hierbei eine ganze Zahl, so dass bei n = 0 zum Zeitpunkt 00 ms gesendet wird, bei n = 1 zum Zeitpunkt 10 ms, und so weiter. Der Zeitpunkt kann von der Auswerteeinheit 10 vorgegeben sein, oder die Mobileinheit 12, 18 sucht sich den Zeitpunkt selbst aus und die Auswerteeinheit 10 passt ihren eigenen Sendezeitpunkt daran an.

Alle vier Basiseinheiten 8 empfangen das Referenzsignal $S_1$ und senden nach einer Verzögerungszeit beziehungsweise Latenzzeit ihr Antwortsignal $S_{1i}$ aus. Hierbei sendet die Basiseinheit 8a das Antwortsignal $S_{1A}$ aus, die Basiseinheit 8b das Antwortsignal $S_{1B}$, und so weiter. Jede Basiseinheit 8 hat wiederum ihre eigene Latenzzeit, die entweder von der Auswerteeinheit 10 festgelegt und den Basiseinheiten 8 jeweils mitgeteilt wurde, oder die in den Basiseinheiten 8 hinterlegt ist. Im gezeigten Ausführungsbeispiel beträgt die Latenzzeit der Basiseinheit 8a 1 ms, die ihr Antwortsignal somit zum Zeitpunkt n1 ms aussendet - die Laufzeit des Signals $S_1$ sei hier vernachlässigt, da sie insbesondere bei einem Abstand von bis zu 100 m sehr viel kleiner als die Latenzzeit ist. Die Latenzzeit der Basiseinheit 8b beträgt in diesem anschaulichen Ausführungsbeispiel 2 ms, die ihr Antwortsignal somit zum Zeitpunkt n2 ms aussendet, und so weiter.

Die Antwortsignale $S_{1i}$ erreichen die Auswerteeinheit 10, die aus deren Ankunft und dem Standort der Basiseinheiten 8 deren Sendezeitpunkt und aus den bekannten beziehungsweise vorgegebenen Latenzen den Empfangszeitpunkt des Referenzsignals $S_1$ bei den jeweiligen Basiseinheiten 8 errechnet. Aus den Empfangszeitpunkten wird die Zeitdifferenz berechnet und daraus, wie oben beschrieben, die Position der Mobileinheit 12, 18. Es ist auch möglich, dass die Basiseinheiten 8 den Empfangszeitpunkt im Antwortsignal an die Auswerteeinheit 10 mitsenden.

Das Antwortsignal $S_{1i}$ enthält den Zähler i, im ersten Referenzsignal $S_1$ die "1" und im ersten Antwortsignal $S_{1i}$ ebenfalls die "1", so dass der Zählerstand, in diesem Fall "1", vom Referenzsignal $S_1$ über das Antwortsignal $S_{1i}$ an die Auswerteeinheit 10 weitergegeben wird. Außerdem kann eine Identifikation der Mobileinheit 12, 18 weitergeleitet werden. Zumindest eine Teilmenge der Daten aus dem Referenzsignal $S_1$ wird somit im Antwortsignal $S_{1i}$ an eine Auswerteeinheit (10) weiterleitet. Jede Taktung zählt der Zähler um eins hoch, so dass alle Einheiten 8, 10, 12, 18 die Signale dem jeweiligen Signalblock des momentanen Taktzählers zuordnen.

Bei dem in FIG 4 gezeigten Ausführungsbeispiel wird das Antwortsignal $S_{1D}$ verschluckt, beispielweise in einem anderen Signal, so dass die Auswerteeinheit 10 das Antwortsignal $S_{1D}$ nicht entziffern kann. Es geht verloren. Falls die Basiseinheit 8d so steht, dass die Auswerteeinheit 10 deren Antwortsignal $S_{1D}$ grundsätzlich nicht empfangen kann, so ist deren Positionsinformation nicht auswertbar.

Um dies zu vermeiden, sind die Basiseinheiten 8 dazu vorbereitet, ein Antwortsignal $S_{1i}$ einer anderen Basiseinheit 8 zu empfangen und in Richtung der Auswerteeinheit 10 weiterzuleiten, entweder direkt oder über eine weitere Basiseinheit 8. Hierzu enthält das Antwortsignal $S_{1i}$ einer Basiseinheit 8 ein, mehrere oder alle empfangenen Antwortsignale $S_{1i}$ einer beziehungsweise der anderen Basiseinheiten 8 des gleichen Taktblocks, also mit dem gleichen Zähler.

Wird ein Antwortsignal $S_{1i}$ korrekt von der Auswerteeinheit 10 erkannt, so kann sie ein Quittiersignal $Q_{1i}$ aussenden. Dieses kann identisch mit dem Antwortsignal $S_{1i}$ sein kann oder zumindest wesentliche Teile daraus enthalten, so dass zumindest die Basiseinheit 8, von der das Antwortsignal $S_{1i}$ stammt, erkennt, dass ihr Antwortsignal $S_{1i}$ korrekt erfasst wurde. Zweckmäßigerweise erkennen alle Basiseinheiten 8 das Quittiersignal $Q_{1i}$, dass das zugehörige Antwortsignal $S_{1i}$ erfasst wurde. Dieses Antwortsignal $S_{1i}$, das Teil $S_{1i}$ des eigenen Antwortsignals $S_{1i}$ sein kann, kann nun aus dem eigenen Antwortsignal $S_{1i}$ gelöscht werden, so dass dieses nur noch alle empfangenen und noch nicht quittierten Signalteile $S_{1i}$ der anderen Basiseinheiten 8 des gleichen Taktblocks enthält.

Bei dem Ausführungsbeispiel aus FIG 4 sendet die Basiseinheit 8a ihr Antwortsignal $S_{1A}$, das - da es das erste Antwortsignal $S_{1A}$ dieses Taktblocks ist - nur den Teil $S_{1a}$ der Basiseinheit 8a enthält. Die Basiseinheiten 8b bis 8d empfangen den Teil $S_{1a}$ des Antwortsignals $S_{1A}$ ebenfalls und integrieren es in ihre Antwortsignal $S_{1B/C}$. Das Antwortsignal $S_{1B}$ enthält somit den Teil $S_{1a}$ der Basiseinheit 8a und den Teil $S_{1b}$ der Basiseinheit 8b. Dieses wird Antwortsignal $S_{1B}$ nun zur Auswerteeinheit 10 gesendet.

Die Auswerteeinheit 10 sendet ihr Quittiersignal $Q_{1i}$ nicht sofort, sondern zu einem Quittierzeitpunkt beziehungsweise in einem Quittierzeitschlitz. Im dargestellten Ausführungsbeispiel liegen zwei Quittierzeitpunkte bei n2,5 ms und n4,5 ms.

Die Auswerteeinheit 10 sendet somit ein Quittiersignal $Q_{1A/B}$, das sowohl den Teil $S_{1a}$ der Basiseinheit 8a als auch den Teil $S_{1b}$ der Basiseinheit 8b enthält.

Die Basiseinheit 8c hat sowohl den Teil $S_{1a}$ als auch den Teil $S_{1b}$ empfangen und in ihr Antwortsignal $S_{1C}$ integriert. Doch da deren Sendezeitpunkt n3 ms hinter dem ersten Quittierzeitpunkt n2,5 ms liegt, hat sie die Quittierung der Teile $S_{1a}$ und $S_{1b}$ ebenfalls empfangen und diese Teile Sia, $S_{1b}$ aus ihrem Antwortsignal $S_{1C}$ gelöscht. Dieses enthält daher nur den Teil $S_{1c}$. Dieser wird an die Auswerteeinheit 10 gesendet, die ihn empfangt und zum Zeitpunkt n4,5 ms quittiert. Die Basiseinheiten 8a und 8b löschen daraufhin den zuvor empfangenen Teil $S_{1c}$ aus ihrem Speicher.

Das Antwortsignal $S_{1D}$ hingegen geht insoweit verloren, als dass es nicht von der Auswerteeinheit 10 verstanden wird. Allerdings wird es von zumindest einer der Basiseinheiten 8 verstanden, z.B. von der Basiseinheit 8c. Diese speichert den Teil $S_{1d}$ und integriert ihn in ihr Antwortsignal $S_{1C}$. Da der Teil $S_{1d}$ nicht quittiert wird, bleibt er im Antwortsignal $S_{1C}$ stehen.

Eine Basiseinheit 8 sendet ihr Antwortsignal $S_{1i}$ mehrfach. Im gezeigten Ausführungsbeispiel steht die zweite Hälfte einer Taktperiode von 10 ms für eine Wiederholung der Antwortprozedur zur Verfügung. In der Realität kann die Latenzzeit kleiner sein, so dass mehr als 10 Wiederholungen innerhalb eines Taktblocks stattfinden. Zum beispielhaften Zeitpunkt n6 ms steht der Basiseinheit 8a ein zweiter Zeitschlitz zur Verfügung. Doch da alle zu sendenden Teile $S_{1a}$, $S_{1b}$ und $S_{1c}$ bereits quittiert wurden, unterbleibt das Senden des Antwortsignals $S_{1A}$, oder es wird ein Leersignal versendet. Auch die Basiseinheit 8b sendet nichts. Der Basiseinheit 8c verbleibt jedoch der Teil $S_{1d}$, der noch nicht quittiert wurde, so dass sie ihr weiteres Antwortsignal $S_{1C}$ zum Zeitpunkt n9 ms sendet, diesmal jedoch nur mit dem Teil $S_{1d}$, da der Teil $S_{1c}$ bereits quittiert wurde. Der Teil $S_{1d}$ gelangt zur Auswerteeinheit 10, die diesen zum Zeitpunkt n9,5 ms quittiert, so dass dieser Teil auch in der Basiseinheit 8c gelöscht wird. Auf diese Weise wird das Signal $S_{1D}$ beziehungsweise der Teil $S_{1d}$ durch Signalhopping von einer Basiseinheit 8d über eine andere Basiseinheit 8c zur Auswerteeinheit 10 versandt. Nun beginnt der zweite Taktblock mit dem Aussenden des Referenzsignals S2.

Die Basiseinheit 8d empfängt unter Umständen keine Quittierung der Auswerteeinheit 10. Infolge dessen sendet sie ihr Signal $S_{1D}$ fortwährend neu während einer Taktperiode eines Zählers. Zwar ist dies beim Ausführungsbeispiel aus FIG 4 nur 2 x, doch bei kleineren Latenzzeiten kann die Wiederholung 10x und öfter stattfinden. Das Signal $S_{1D}$ wird von der empfangenden Basiseinheit 8c empfangen, doch da es bereits quittiert wurde wird es von der Basiseinheit 8c nicht zur Auswerteeinheit 10 weitergeleitet. So sendet die abgeschattete Basiseinheit 8d zwar fortwährend, ihr Signal $S_{1D}$ wird jedoch nicht zur Auswerteeinheit 10 weitergeleitet. Dies wiederholt sich in jeder Taktperiode, so lange bis die abgeschattete Basiseinheit 8d eine Quittierung empfängt.

Weitere Ausführungsbeispiele werden jeweils anhand der weiteren FIGen beschrieben. Die Beschreibungen der nachfolgenden Ausführungsbeispiele beschränken sich jeweils auf die Unterschiede zum jeweils vorhergehenden Ausführungsbeispiel, auf das bezüglich gleich bleibender Merkmale und Funktionen verwiesen wird. Im Wesentlichen gleiche beziehungsweise einander entsprechende Elemente sind, soweit es zweckmäßig ist, mit den gleichen Bezugszeichen bezeichnet und nicht erwähnte Merkmale sind in den nachfolgenden Ausführungsbeispielen übernommen, ohne dass sie erneut beschrieben sind. Die in den folgenden Ausführungsbeispielen verwendeten Verfahren zum Bestimmen einer Position können beliebige der vorangegangenen Verfahren sein beziehungsweise beliebige Merkmale der vorangegangenen Verfahrensbeschreibungen umfassen.

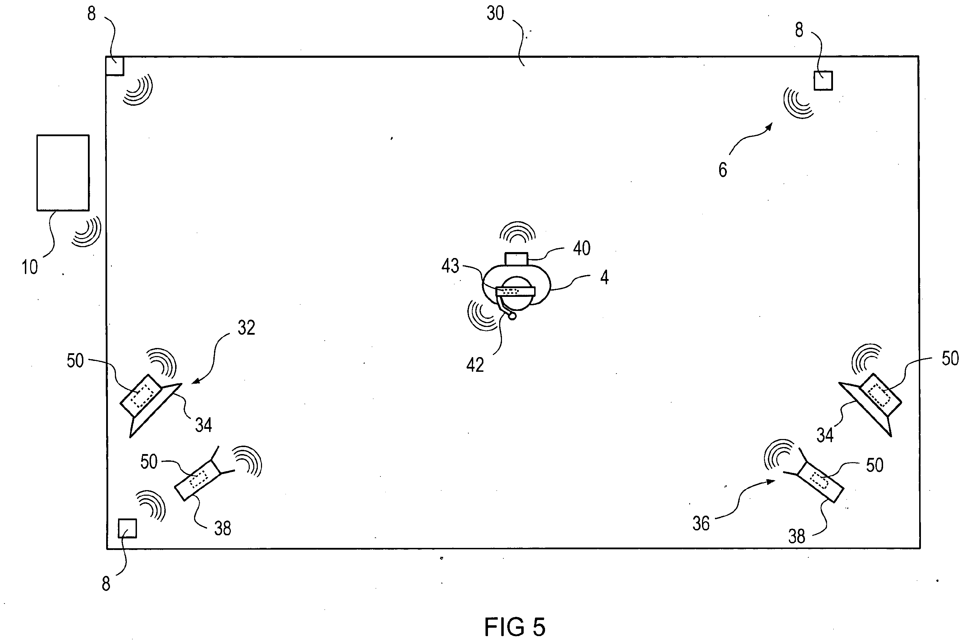

FIG 5 zeigt schematisch eine Bühne 30, beispielweise eine Opernbühne, in einer Draufsicht. Im vorliegenden Ausführungsbeispiel ist die Bühne 30 der Bezugsraum. Somit ist der Bezugsraum 2-dimensional. Auf der Bühne 30 ist ein Positionssystem 6 angeordnet, welches im vorliegenden Fall drei statt vier Basiseinheiten 8 umfasst. Ferner umfasst das Positionssystem 6 eine Auswerteeinheit 10, die neben der Bühne 30 angeordnet ist.

Außerdem ist ein Audiosystem 32 dargestellt, das mehrere bewegliche Lautsprecher 34 umfasst, in denen jeweils eine Mobileinheit 50 angeordnet sein kann. Darüber hinaus ist ein Beleuchtungssystem 36 dargestellt, das mehrere bewegliche Beleuchtungseinrichtungen 38 umfasst, in denen jeweils eine Mobileinheit 50 angeordnet sein kann. Im vorliegenden Fall handelt es sich bei den Beleuchtungseinrichtungen 38 um Scheinwerfer. Anstelle oder zusätzlich zu den Mobileinheiten 50 könnten die Lautsprecher 34 und/oder die Beleuchtungseinrichtungen 38 z.B. jeweils eine weitere Basiseinheit 8 aufweisen.

Auf der Bühne 30 befindet sich eine Person 4, bei der es sich im vorliegenden Ausführungsbeispiel um einen Darsteller, insbesondere einen Opernsänger, handelt. Wenn - wie im vorliegenden Fall - eine Höhenkoordinate der Person 4 bekannt beziehungsweise irrelevant ist, sind drei Basiseinheiten 8 zur Positionsermittlung prinzipiell ausreichend. Aus Redundanzgründen oder aus anderen Gründen könnten aber grundsätzlich mehr als drei Basiseinheiten 8 vorgesehen sein. Die Basiseinheiten 8 sind an geeigneten Stellen der Bühne 30 platziert. Wenn sich die Person 4 jedoch auf der Bühne 30 nicht nur auf einer Fläche bewegen kann, sondern auch Höhenunterschiede überwinden kann, kann unter Umständen ein 3D-Positionsermittlung erforderlich sein. In letztgenannten Fall sind zumindest vier Basiseinheiten 8 vorteilhaft.

Des Weiteren kann das Positionssystem 6 eine weitere Mobileinheit 40 aufweisen, welche an einer Person 4, z.B. an einem Kleidungsstück der Person 4, befestigt sein kann. Gemäß FIG 5 trägt die Person 4 diese Mobileinheit 40 an ihrem Rücken. Die Mobileinheiten 40, 50 können identisch zu den Mobileinheiten 12 beziehungsweise 18 sein. Weiter kann die Person 4 an ihrem Kopf ein Headset 42 mit einem Mikrofon tragen. Das Headset 42 kann ein Bestandteil des Positionssystems 6 sein, wobei in dem Headset 42 ein Sensor 43, beispielsweise ein Hall-Sensor/Gyro/ INS - wie oben beschrieben, zur Ermittlung einer Ausrichtung des Headset 42 angeordnet ist.

Der Sensor 43 erzeugt ein Sensorsignal, welches der Sensor 43 an die Auswerteeinheit 10 übermittelt. Anhand des Sensorsignals wird eine Blickrichtung der Person 4 beziehungsweise eine räumliche Ausrichtung ihres Kopfs ermittelt. Ferner kann das Sensorsignal zur Ermittlung einer Ist-Position der Person 4 beziehungsweise der Mobileinheit 40 an ihrem Rücken benutzt werden, beispielsweise bei einer Plausibilitätsprüfung oder als weitere Messgröße.

Es besteht die Möglichkeit, die Basiseinheiten 8 an vorbestimmten Bezugspunkten zu positionieren, beispielsweise an Markierungen auf der Bühne 30. Eine Lokalisierung der Person 4 beziehungsweise der Mobileinheit 40, welche die Person an ihrem Rücken trägt, relativ zu den Bezugspunkten ist hierdurch einfach möglich.

Alternativ können einzelne oder alle der Basiseinheiten 8 frei wählbar aufgestellt werden und ihre Relativpositionen zueinander bestimmt werden. Die Ist-Position der Person 4 beziehungsweise der Mobileinheit 40 an ihrem Rücken kann relativ zur Ist-Position einer der Basiseinheiten 8 bestimmt werden.

Die Basiseinheiten 8 sind dazu eingerichtet, untereinander sowie mit der Auswerteeinheit 10 drahtlos, insbesondere mittels Funkwellen, Daten auszutauschen. Weiterhin sind die Mobileinheiten 40, 50 dazu eingerichtet, Referenzsignale in Form von Funkwellen zu versenden.

Die Abstände, welche die Basiseinheiten 8 zueinander aufweisen, werden analog zu der im Ausführungsbeispiel aus FIG 1 beschriebenen Art und Weise ermittelt.

Ferner werden die Ist-Positionen der in den Lautsprechern 34 und den Beleuchtungseinrichtungen 38 angeordneten Mobileinheiten 50 sowie der am Rücken der Person 4 angeordneten Mobileinheit 40 analog zu der im Ausführungsbeispiel aus FIG 1 beschriebenen Art und Weise ermittelt. Allerdings werden im vorliegenden Ausführungsbeispiel von der Auswerteeinheit 10 nur zwei Teilmengen des Bezugsraums und folglich auch nur eine einzelne Schnittmenge dieser Teilmengen ermittelt, wobei die Teilmengen im vorliegenden Fall Linien sind und die Schnittmenge ein Punkt ist.

In Abhängigkeit der besagten Ist-Positionen sowie der Blickrichtung der Person 4 werden vom Beleuchtungssystem 36 und vom Audiosystem 32 vorgegebene Aktionen ausgeführt. Das Beleuchtungssystem 36 und das Audiosystem 32 werden hierbei von der Auswerteeinheit 10 gesteuert, welche dem Beleuchtungssystem 36 und dem Audiosystem 32 Steuerbefehle zur Durchführung solcher vorgegebenen Aktionen übersendet.

Eine solche vorgegebene Aktion des Beleuchtungssystems 36 kann z.B. sein, dass das Beleuchtungssystem 36 eine räumliche Ausrichtung der Beleuchtungseinrichtungen 38, deren Lichtstärken und/oder deren Aperturdurchmesser verändert. Hierbei können die Beleuchtungseinrichtungen 38 beispielsweise automatisiert derart nachgeführt werden, dass die Person 4 stets ausgeleuchtet ist, auch wenn sie sich von einer Stelle der Bühne 30 zu einer anderen Stelle der Bühne 30 bewegt. Auf ein aufwendiges, manuelles Nachführen der Beleuchtungseinrichtungen 38 kann verzichtet werden. Außerdem kann automatisch eine Größe eines Scheinwerferspots, mit dem die Person 4 ausgeleuchtet wird, konstant gehalten werden, sodass insbesondere eine Aufweitung des Scheinwerferspots vermieden werden kann, wenn sich die Person 4 von den Beleuchtungseinrichtungen 38 entfernt.

Eine vorgegebene Aktion des Audiosystem 32 kann z.B. sein, dass das Audiosystem 32 eine räumliche Ausrichtung der Lautsprecher 34 und/oder deren Lautstärke verändert. Insbesondere kann dadurch beim Publikum ein räumliches Klangerlebnis entstehen. Bewegt sich die Person 4 auf der Bühne 30, so kann ein Audioparameter entsprechend nachgeführt werden, z.B. die Lautstärken der Lautsprecher 34 und/oder eine Phasenverschiebung von Audiosignalen, sodass das räumliche Klangerlebnis der optisch wahrgenommenen Bewegung entspricht. Wendet die Person 4 ihren Kopf vom Publikum ab, kann z.B. ein Gesang der Person über die Lautsprecher 34 gedämpft und gegebenenfalls mit einem Hall versehen werden, sodass beim Publikum der Eindruck entsteht, der Gesang wird aus einem Raum zurückgeworfen.

Weiterhin können die Abstände der in den Lautsprechern 34 und Beleuchtungseinrichtungen 38 angeordneten Mobileinheiten 50 zu der am Rücken der Person 4 angeordneten Mobileinheit 40 ermittelt werden. Dadurch können die Lautsprecher 34 und die Beleuchtungseinrichtungen 38 automatisch ihre jeweilige räumliche Ausrichtung in Abhängigkeit von der Ist-Position der Person 4 verändern.

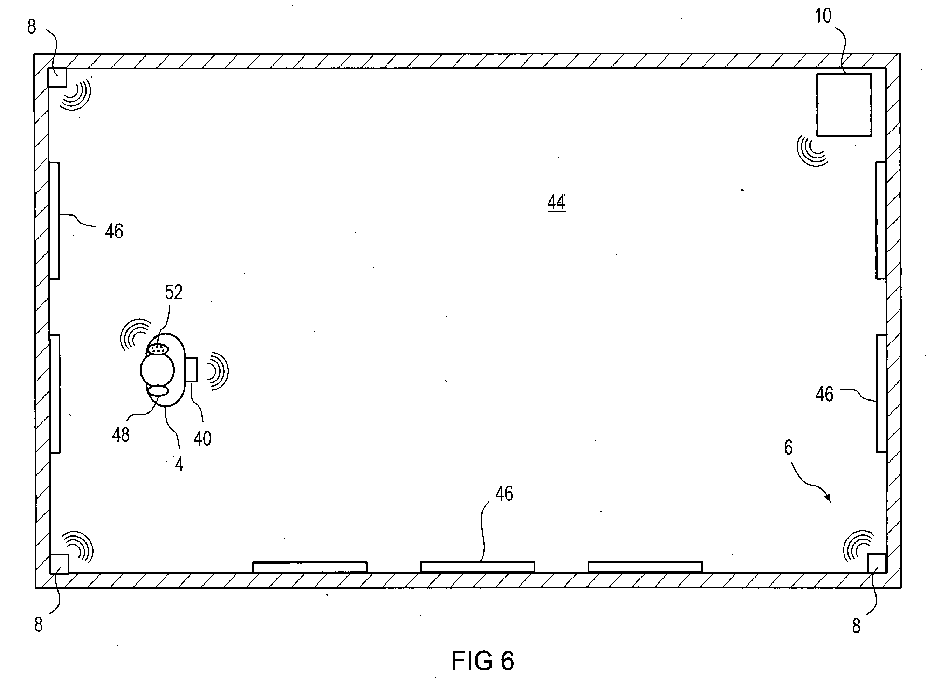

FIG 6 zeigt schematisch einen horizontalen Querschnitt eines Museumsraums 44. Im vorliegenden Ausführungsbeispiel ist eine Bodenfläche des Museumsraums 44 der Bezugsraum. Somit ist der Bezugsraum 2-dimensional. Im Museumsraum 44 befindet sich eine Person 4, bei der es sich im vorliegenden Ausführungsbeispiel um einen Museumsbesucher handelt. Weiterhin sind im Museumsraum 44, insbesondere an dessen Wänden, mehrere Gemälde 46 oder sonstige andere Ausstellungsstücke angeordnet.

Ferner ist im Museumsraum 44 ein Positionssystem 6 angeordnet. Das Positionssystem 6 umfasst unter anderem drei Basiseinheiten 8, die in verschiedenen Ecken des Museumsraums 44 angeordnet sind. Zudem umfasst das Positionssystem 6 eine Auswerteeinheit 10.

Des Weiteren umfasst das Positionssystem 6 eine Mobileinheit 40, welche die zuvor erwähnte Person 4, d.h. der Museumsbesucher, an ihrem Rücken trägt.

Darüber hinaus umfasst das Positionssystem 6 eine Kopfhörereinheit 48, welche die Person 4 auf ihrem Kopf trägt und in welcher eine zusätzliche Mobileinheit 52 angeordnet ist.

Die Basiseinheiten 8 sind dazu eingerichtet, untereinander sowie mit der Auswerteeinheit 10 drahtlos, insbesondere mittels Funkwellen, Daten auszutauschen. Weiterhin sind die Mobileinheiten 40, 52 dazu eingerichtet, Referenzsignale in Form von Funkwellen zu versenden.

Die Abstände, welche die Basiseinheiten 8 zueinander aufweisen, werden von der Auswerteeinheit 10 analog zu einem der oben beschriebenen Verfahren ermittelt.

Außerdem ermittelt die Auswerteeinheit 10 analog zu der im Ausführungsbeispiel aus FIG 1 beschriebenen Art und Weise die Ist-Positionen der Mobileinheiten 40, 52. Allerdings werden im vorliegenden Ausführungsbeispiel von der Auswerteeinheit 10 nur zwei Teilmengen des Bezugsraums und folglich auch nur eine einzelne Schnittmenge dieser Teilmengen ermittelt, wobei die Teilmengen im vorliegenden Fall Linien sind und die Schnittmenge ein Punkt ist.

Anhand der zuvor genannten Ist-Positionen wiederum ermittelt die Auswerteeinheit 10 eine räumliche Ausrichtung des Kopfs der Person 4.

Über die Kopfhörereinheit 48 werden der Person 4 vorgegebene Tonsequenzen abgespielt, die von der Ist-Position und der Ausrichtung ihres Kopfs abhängig sind. Die Tonsequenzen können insbesondere Informationen über ein Gemälde 46 enthalten, vor welchem die Person steht und/oder auf welches die Person gerade blickt.

Ist beispielsweise ein im Folgenden zu betrachtendes Bild links von der Person 4 angeordnet, so wird der Person 4 eingespielt "Zur linken Hand sehen Sie ...". Die Person 4 kann sich nun in diese Richtung umdrehen und erblickt das angesprochene Gemälde 46. Alternativ oder zusätzlich wird der Person 4 die Tonsequenz von der entsprechenden Seite des Gemäldes 46 zugespielt, so als wenn ein virtueller Museumsführer die Person von der Seite des Gemäldes 46 ansprechen würde. Die Person 4 dreht sich zum virtuellen Museumsführer und erblickt das angesprochene Gemälde 46.

Außerdem kann der virtuelle Museumsführer auf die Person 4 eingehen, indem er die Bewegung der Person 4 registriert und die Audioeinspielung entsprechend steuert. Kam beispielsweise die Sequenz "Wenn Sie sich nun nach rechts wenden, so erblicken Sie dort ...", hat sich die Person 4 jedoch noch nicht in diese Richtung gedreht, was durch die beiden Mobileinheiten 40, 52 am Körper der Person 4 erkannt werden kann, so kann die Audioeinspielung stoppen und so lange warten, bis die Person 4 tatsächlich auf das Gemälde 46, das nun zu besprechen ist, schaut. Auch können der Person 4 Alternativen angeboten werden, in der Art "zu Ihrer linken Hand sehen Sie nun ..., und zu Ihrer rechten Hand vor sich erblicken Sie ...". Je nachdem in welche Richtung sich die Person 4 wendet, wird ihm die entsprechende Erklärung eingespielt.

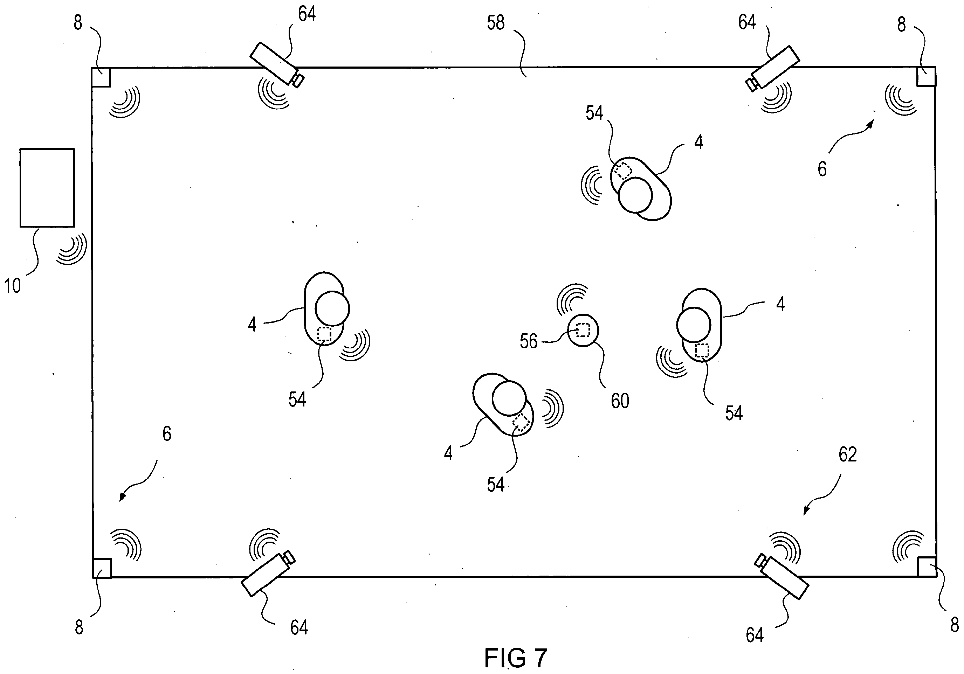

FIG 7 zeigt schematisch ein Fußballfeld 58 in einer Draufsicht. Im vorliegenden Ausführungsbeispiel ist das Fußballfeld 58 der Bezugsraum. Folglich ist der Bezugsraum in einer einfachen Variante 2-dimensional, wenn auch eine Flughöhe des Balls 60 bestimmt werden soll 3-dimensional. Weiterhin ist ein Positionssystem 6 dargestellt. Im vorliegenden Fall umfasst das Positionssystem 6 vier Basiseinheiten 8, die an den Ecken des Fußballfelds 58, insbesondere jeweils in einer Eckfahne, angeordnet sind. Bei einer 3-dimensionalen Vermessung ist eine weitere Basiseinheit über dem Fußballfeld 58 angeordnet, beispielsweise in einem Flutlichtmast. Grundsätzlich sind im 2-dimensionalen Fall drei Basiseinheiten 8 zur Positionsermittlung ausreichend. Eine vierte Basiseinheit 8 ist aus Redundanzgründen möglich oder zur Vermessung der dritten Dimension notwendig.

Auf dem Fußballfeld 58 befinden sich mehrere Personen 4. Im vorliegenden Ausführungsbeispiel handelt es sich bei den Personen 4 um Fußballspieler. Jeder der Fußballspieler trägt in seinem rechten Schuh eine Mobileinheit 54. Darüber hinaus ist in einem Fußball 60, mit dem die Fußballspieler spielen, ebenfalls eine Mobileinheit 56 angeordnet.

Neben dem Fußballfeld 58 ist eine Auswerteeinheit 10 angeordnet. Außerdem ist ein Kamerasystem 62 dargestellt, welches mehrere Kameras 64 umfasst. Die Kameras 64 sind an zwei aneinander gegenüberliegenden Seiten des Fußballfelds 58 angeordnet, wobei die Kameras 64 jeweils ortsfest angeordnet sind.

Die Basiseinheiten 8 sind dazu eingerichtet, untereinander sowie mit der Auswerteeinheit 10 drahtlos, insbesondere mittels Funkwellen, Daten auszutauschen. Weiterhin sind die Mobileinheiten 54, 56 dazu eingerichtet, Referenzsignale in Form von Funkwellen zu versenden.

Die Abstände, welche die Basiseinheiten 8 zueinander aufweisen, werden von der Auswerteeinheit 10 analog zu einem der oben beschriebenen Verfahren ermittelt.

Außerdem ermittelt die Auswerteeinheit 10 analog zu der im Ausführungsbeispiel aus FIG 1 beschriebenen Art und Weise die Ist-Positionen besagter Mobileinheiten 54, 56. Allerdings werden im vorliegenden Ausführungsbeispiel von der Auswerteeinheit 10 nur zwei Teilmengen des Bezugsraums und folglich auch nur eine einzelne Schnittmenge dieser Teilmengen ermittelt, wobei die Teilmengen im vorliegenden Fall Linien sind und die Schnittmenge ein Punkt ist.

Unter Verwendung der Ist-Positionen der in den Schuhen der Fußballspieler angeordneten Mobileinheiten 54 wird von der Auswerteeinheit 10 für jeden der Fußballspieler seine Relativposition bezüglich des Balls ermittelt. Über eine vorgegebene Zeitdauer, beispielsweise über ein ganzes Spiel oder eine Halbzeit hinweg, werden die jeweiligen Relativpositionen der Fußballspieler aufgezeichnet. Diese Daten werden entweder direkt in der Auswerteeinheit 10 oder auf einer externen Einheit, an welche die Auswerteeinheit 10 diese Daten übermittelt, aufgezeichnet. Die Relativpositionen der Fußballspieler können dann beispielsweise einem Mannschaftstrainer für eine nachträgliche Spielanalyse zur Verfügung gestellt werden.

Des Weiteren werden die Kameras 64 von der Auswerteeinheit 10 derart angesteuert, dass sie ihre jeweilige Ausrichtung in Abhängigkeit von den Ist-Positionen der Fußballspieler ändern. Zu diesem Zweck sendet die Auswerteeinheit 10 den Kameras 64 entsprechende Steuerbefehle. Insbesondere können die Kameras 64 von der Auswerteeinheit 10 derart angesteuert werden, dass sie ihre jeweilige Ausrichtung derart ändern, dass sich stets derjenige Fußballspieler, der dem Ball 60 am nächsten ist, im Blickfeld der jeweiligen Kamera 64 befindet.

Obwohl die Erfindung im Detail durch die bevorzugten Ausführungsbeispiele näher illustriert und beschrieben wurde, ist die Erfindung nicht durch die offenbarten Ausführungsbeispiele eingeschränkt und andere Variationen können hieraus abgeleitet werden, ohne den Schutzumfang der Erfindung zu verlassen.

Bezugszeichenliste

2 Raum
4 Person
6 Positionssystem
8 Basiseinheit
10 Auswerteeinheit
12 Mobileinheit
14 Ausgabeeinheit
16 Kamera
18 Mobileinheit
20 Ausgabeeinheit
22 Wasserwaage
24 Markierungsgerät
26 Projektionseinheit
28 Wandfläche
30 Bühne
32 Audiosystem
34 Lautsprecher
36 Beleuchtungssystem
38 Beleuchtungseinrichtung
40 Mobileinheit
42 Headset
43 Sensor
44 Museumsraum
46 Gemälde
48 Kopfhörereinheit
50 Mobileinheit
52 Mobileinheit
54 Mobileinheit
56 Mobileinheit
58 Fußballfeld
60 Fußball
62 Kamerasystem
64 Kamera

**Patentansprüche**

1. Verfahren zum Bestimmen einer Position einer Mobileinheit (12, 18, 40, 50-56) relativ zu zumindest drei Basiseinheiten (8), bei dem die Mobileinheit (12, 18, 40, 50-56) zumindest ein Signal versendet und die Basiseinheiten (8) dieses empfangen und als Trigger für ein Aussenden eines Antwortsignals an eine Auswerteeinheit (10) verwenden, **dadurch gekennzeichnet, dass** die Auswerteeinheit (10) den Eingangszeitpunkt der Antwortsignale bei sich und aus der bekannten Position der Basiseinheiten (8) zur Auswerteeinheit (10) die Absendezeitpunkte der Antwortsignale von den Basiseinheiten (8) ermittelt und daraus und den Latenzzeiten der Basiseinheiten (8) die Empfangszeitpunkte des Signals der Mobileinheit (12, 18, 40, 50-56) bei den Basiseinheiten (8) und daraus die Zeitdifferenz (D) zwischen den einzelnen Empfangszeitpunkten und daraus zumindest zwei Teilräume (T) berechnet und aus dem Schnittpunkt der Teilräume (T) die Position der Mobileinheit (12, 18, 40, 50-56) bestimmt.

2. Verfahren nach Anspruch 1, **dadurch gekennzeichnet, dass** die Basiseinheiten (8) mit der Mobileinheit (12, 18, 40, 50-56) synchronisiert sind.

3. Verfahren nach Anspruch 1 oder 2,
**dadurch gekennzeichnet, dass** das Signal eine Kennung der Mobileinheit (12, 18, 40, 50-56) sowie einen Zählwert umfasst, wobei der Zählwert von einem Zähler der Mobileinheit (12, 18, 40, 50-56) bei jedem Versenden eines Signals hochgezählt wird.

4. Verfahren nach einem der vorhergehenden Ansprüche,
**dadurch gekennzeichnet, dass** die Basiseinheiten (8) einen Empfangszeitpunkt, an dem sie das Signal von der Mobileinheit (12, 18, 40, 50-56) empfangen haben, zusammen mit ihrer eigenen Kennung, einer Kennung der Mobileinheit (12, 18, 40, 50-56) und einem im Signal enthaltenen Zählwert an die Auswerteeinheit (10) übermitteln.

5. Verfahren nach einem der vorhergehenden Ansprüche,
**dadurch gekennzeichnet, dass** eine der Basiseinheiten (8), insbesondere falls ihr Funckontakt zur Auswerteeinheit (10) ausfällt, Daten an eine andere der Basiseinheiten (8) übermittelt, welche mindestens eine Teilmenge der Daten an die Auswerteeinheit (10) weiterleitet.

6. Verfahren nach einem der vorhergehenden Ansprüche,
**dadurch gekennzeichnet, dass** die Mobileinheit (12, 18, 40, 50-56) einen Sensor (43) aufweist, von dem ein Sensorsignal erzeugt wird, welches von einer Ausrichtung und/oder einem Bewegungszustand der Mobileinheit (12, 18, 40, 50-56) abhängig ist, und die Ist-Position der Mobileinheit (12, 18, 40, 50-56) unter Berücksichtigung des Sensorsignals ermittelt wird.

7. Verfahren nach einem der vorhergehenden Ansprüche,
**dadurch gekennzeichnet, dass** eine Person (4) die Mobileinheit (12, 18, 40, 50-56) an ihrem Körper trägt und mithilfe eines Sensors (43) der Mobileinheit (12, 18, 40, 50-56) eine Blickrichtung der Person (4) ermittelt wird.

8. Verfahren nach einem der vorhergehenden Ansprüche,
**dadurch gekennzeichnet, dass** eine Person (4) die Mobileinheit (12, 18, 40, 50-56) an ihrem Körper trägt und von einem Beleuchtungssystem (36) in Abhängigkeit von der ermittelten Positionsinformation mindestens eine vorgegebene Aktion ausgeführt wird, insbesondere eine räumliche Ausrichtung, eine Lichtstärke und/oder einen Aperturdurchmesser einer Beleuchtungseinrichtung (38) verändert wird.

9. Verfahren nach einem der vorhergehenden Ansprüche,
**dadurch gekennzeichnet, dass** eine Person (4) die Mobileinheit (12, 18, 40, 50-56) an ihrem Körper trägt und von einem Audiosystem (32) in Abhängigkeit von der ermittelten Positionsinformation, mindestens eine vorgegebene Aktion ausgeführt wird, insbesondere eine räumliche Ausrichtung eines Lautsprechers (34) verändert wird, eine Lautstärke eines Lautsprechers (34) verändert wird und/oder eine vorgegebene Tonsequenz abgespielt wird.

10. Verfahren nach einem der vorhergehenden Ansprüche,
**dadurch gekennzeichnet, dass** eine Person (4) die Mobileinheit (12, 18, 40, 50-56) an ihrem Körper trägt, und von einem Kamerasystem (62) in Abhängigkeit von der ermittelten Positionsinformation eine Ausrichtung einer Kamera (64) des Kamerasystems (62) derart verändert wird, dass sich die Person (4) in einem Blickfeld der Kamera (64) befindet.

11. Verfahren nach einem der vorhergehenden Ansprüche,
**dadurch gekennzeichnet, dass** für eine vorgegebene Anzahl von Basiseinheiten (8) ihre Ist-Positionen ermittelt werden und anhand der Ist-Positionen der Basiseinheiten (8) geprüft wird, ob die Basiseinheiten (8) in derjenigen geometrischen Beziehung zueinander angeordnet sind, in der die gleiche Anzahl von vorbestimmten Bezugspunkten zueinander liegen, und eine vom Ergebnis der Prüfung abhängige Meldung erzeugt wird.

12. Positionssystem (6) mit einer Mobileinheit (12, 18, 40, 50-56), zumindest drei Basiseinheiten (8) und einer Auswerteeinheit (10) zum Ermitteln einer Position der Mobileinheit (12, 18, 40, 50-56) relativ zu den Basiseinheiten (8), bei dem die Mobileinheit (12, 18, 40, 50-56) dazu vorbereitet ist, zumindest ein Signal auszusenden, die Basiseinheiten (8) dazu vorbereitet sind dieses zu empfangen und als Trigger für ein Aussenden eines Antwortsignals an die Auswerteeinheit (10) zu verwenden und die Auswerteeinheit (10) dazu vorbereitet ist, den Eingangszeitpunkt der Antwortsignale bei sich und aus der bekannten Position der Basiseinheiten (8) zur Auswerteeinheit (10) die Absendezeitpunkte der Antwortsignale von den Basiseinheiten (8) zu ermitteln und daraus und den Latenzzeiten der Basiseinheiten (8) die Empfangszeitpunkte des Signals der Mobileinheit (12, 18, 40, 50-56) bei den Basiseinheiten (8) und daraus die Zeitdifferenz (D) zwischen den einzelnen Empfangszeitpunkten, und daraus zumindest zwei Teilräume (T) zu berechnen und aus dem Schnittpunkt mehrerer Teilräume (T) die Position der Mobileinheit (12, 18, 40, 50-56) zu bestimmen.

**Claims**

1. Method for determining a position of a mobile unit (12, 18, 40, 50-56) relative to at least three base units (8), in which the mobile unit (12, 18, 40, 50-56) sends at least one signal and the base units (8) receive said signal and use it as a trigger for sending a response signal to an evaluation unit (10),
**characterized in that**
the evaluation unit (10) ascertains the time of arrival of the response signals at itself and, from the known position of the base units (8) in relation to the evaluation unit (10), the times of despatch of the response signals from the base units (8) and, from these and the latencies of the base units (8), calculates the times of reception of the signal of the mobile unit (12, 18, 40, 50-56) at the base units (8) and, from these, the time difference (D) between the individual times of reception and, from that, at least two partial spaces (T) and determines the position of the mobile unit (12, 18, 40, 50-56) from the point of intersection of the partial spaces (T) .

2. Method according to Claim 1,
**characterized in that**
the base units (8) are in sync with the mobile unit (12, 18, 40, 50-56).

3. Method according to Claim 1 or 2,
**characterized in that**
the signal comprises an identifier of the mobile unit (12, 18, 40, 50-56) and a count, wherein the count is incremented by a counter of the mobile unit (12, 18, 40, 50-56) whenever a signal is sent.

4. Method according to one of the preceding claims,
**characterized in that**
the base units (8) transmit a time of reception at which they have received the signal from the mobile unit (12, 18, 40, 50-56) to the evaluation unit (10) together with their own identifier, an identifier of the mobile unit (12, 18, 40, 50-56) and a count that the signal contains.

5. Method according to one of the preceding claims,
**characterized in that**
one of the base units (8), in particular if its radio contact with the evaluation unit (10) is lost, transmits data to another of the base units (8), which forwards at least one subset of the data to the evaluation unit (10).

6. Method according to one of the preceding claims,
**characterized in that**
the mobile unit (12, 18, 40, 50-56) has a sensor (43) that generates a sensor signal that is dependent on an orientation and/or a state of motion of the mobile unit (12, 18, 40, 50-56), and the actual position of the mobile unit (12, 18, 40, 50-56) is ascertained by taking into consideration the sensor signal.

7. Method according to one of the preceding claims,
**characterized in that**
a person (4) wears the mobile unit (12, 18, 40, 50-56) on his body and a sensor (43) of the mobile unit (12, 18, 40, 50-56) is used to ascertain a line of vision of the person (4).

8. Method according to one of the preceding claims,
**characterized in that**
a person (4) wears the mobile unit (12, 18, 40, 50-56) on his body and a lighting system (36) takes the ascertained position information as a basis for performing at least one prescribed action, in particular altering a spatial orientation, a light intensity and/or an aperture diameter of a lighting device (38).

9. Method according to one of the preceding claims,
**characterized in that**
a person (4) wears the mobile unit (12, 18, 40, 50-56) on his body and an audio system (2) takes the ascertained position information as a basis for performing at least one prescribed action, in particular altering a spatial orientation of a loudspeaker (34), altering a volume of a loudspeaker (34) and/or playing back a prescribed sound sequence.

10. Method according to one of the preceding claims,
    **characterized in that**
    a person (4) wears the mobile unit (12, 18, 40, 50-56) on his body and a camera system (62) takes the ascertained position information as a basis for altering an orientation of a camera (64) of the camera system (62) such that the person (4) is in a field of view of the camera (64).

11. Method according to one of the preceding claims,
    **characterized in that**
    a prescribed number of base units (8) have their actual positions ascertained for them and the actual positions of the base units (8) are used to check whether the base units (8) are arranged **in that** geometric relationship to one another in which the same number of predetermined reference points lie in relation to one another, and a report dependent on the result of the check is produced.

12. Position system (6) having a mobile unit (12, 18, 40, 50-56), at least three base units (8) and an evaluation unit (10) for ascertaining a position of the mobile unit (12, 18, 40, 50-56) relative to the base units (8), in which the mobile unit (12, 18, 40, 50-56) is prepared to send at least one signal, the base units (8) are prepared to receive said signal and to use it as a trigger for sending a response signal to the evaluation unit (10), and the evaluation unit (10) is prepared to ascertain the time of arrival of the response signals at itself and, from the known position of the base units (8) in relation to the evaluation unit (10), the times of despatch of the response signals from the base units (8) and, from these and the latencies of the base units (8), to calculate the times of reception of the signal of the mobile unit (12, 18, 40, 50-56) at the base units (8) and, from these, the time difference (D) between the individual times of reception and, from that, at least two partial spaces (T), and to determine the position of the mobile unit (12, 18, 40, 50-56) from the point of intersection of multiple partial spaces (T).

**Revendications**

1. Procédé de détermination de la position d'une unité mobile (12, 18, 40, 50-56) par rapport à au moins trois unités de base (8), dans lequel l'unité mobile (12, 18, 40, 50-56) émet au moins un signal et les unités de base (8) reçoivent ce dernier et l'utilisent comme gâchette pour envoyer un signal de réponse à une unité d'évaluation (10),
   **caractérisé en ce que**
   l'unité d'évaluation (10) détermine l'instant d'entrée des signaux de réponse chez elle et, à partir de la position connue des unités de base (8) par rapport à l'unité d'évaluation (10), détermine les instants d'émission des signaux de réponse des unités de base (8), à partir de là et des temps de latence des unités de base (8), les instants de réception du signal de l'unité mobile (12, 18, 40, 50-56) sur les unités de base (8), de là la différence de temps (D) entre les différents instants de réception, et de là calcule au moins deux espaces partiels (T) et détermine la position de l'unité mobile (12, 18, 40, 50-56) à partir du point de concours des espaces partiels (T).

2. Procédé selon la revendication 1, **caractérisé en ce que** les unités de base (8) sont synchronisées par rapport à l'unité mobile (12, 18, 40, 50-56).

3. Procédé selon les revendications 1 ou 2, **caractérisé en ce que** le signal comporte une caractérisation de l'unité mobile (12, 18, 40, 50-56) ainsi qu'une valeur de comptage, la valeur de comptage étant incrémentée par un compteur de l'unité mobile (12, 18, 40, 50-56) lors de chaque émission d'un signal.

4. Procédé selon l'une des revendications précédentes, **caractérisé en ce que** les unités de base (8) transmettent à l'unité d'évaluation (10) l'instant de réception auquel elles ont reçu le signal de l'unité mobile (12, 18, 40, 50-56), en même temps que leur propre caractérisation, qu'une caractérisation de l'unité mobile (12, 18, 40, 50-56) et qu'une valeur de comptage que le signal contient.

5. Procédé selon l'une des revendications précédentes, **caractérisé en ce qu'**en particulier en cas de défaillance du contact radio avec l'unité d'évaluation (10), une des unités de base (8) transmet des données à une autre des unités de base (8) qui elle-même transmet au moins une partie des données à l'unité d'évaluation (10).

6. Procédé selon l'une des revendications précédentes, **caractérisé en ce que** l'unité mobile (12, 18, 40, 50-56) présente un capteur (43) qui forme un signal de capteur qui dépend de l'orientation et/ou de l'état de déplacement de l'unité mobile (12, 18, 40, 50-56), la position effective de l'unité mobile (12, 18, 40, 50-56) étant déterminée en tenant compte du signal du capteur.

7. Procédé selon l'une des revendications précédentes, **caractérisé en ce qu'**une personne (4) porte l'unité mobile (12, 18, 40, 50-56) sur son corps et **en ce que** la direction d'observation de la personne (4) est déterminée à l'aide d'un capteur (43) de l'unité mobile (12, 18, 40, 50-56).

8. Procédé selon l'une des revendications précédentes, **caractérisé en ce qu'**une personne (4) porte l'unité mobile (12, 18, 40, 50-56) sur son corps et **en ce qu'**au moins une action prédéterminée est exécutée par un système d'éclairage (36) en fonction de l'information de position qui a été déterminée, et en particulier l'orientation spatiale, l'intensité d'éclairage et/ou le diamètre d'ouverture d'un dispositif d'éclairage (38) sont modifiés.

9. Procédé selon l'une des revendications précédentes, **caractérisé en ce qu'**une personne (4) porte l'unité mobile (12, 18, 40, 50-56) sur son corps et **en ce qu'**en fonction de l'information de position qui a été déterminée, un système audio (32) exécute au moins une action prédéterminée et en particulier une orientation spatiale d'un haut-parleur (34) est modifiée, le volume sonore d'un haut-parleur (34) est modifié et/ou une séquence de sons prédéterminée est jouée.

10. Procédé selon l'une des revendications précédentes, **caractérisé en ce qu'**une personne (4) porte l'unité mobile (12, 18, 40, 50-56) sur son corps et **en ce qu'**un système de caméra (62) modifie l'orientation de la caméra (64) du système de caméra (62) en fonction de l'information de position qui a été déterminée de telle sorte que la personne (4) soit située dans le champ d'observation de la caméra (64).

11. Procédé selon l'une des revendications précédentes, **caractérisé en ce que** la position effective d'un nombre prédéterminée d'unités de base (8) est déterminée et, à partir des positions effectives des unités de base (8), on vérifie si les unités de base (8) sont disposés les unes par rapport aux autres dans un rapport géométrique dans lequel le même nombre de points de référence prédéterminés sont situés les uns par rapport aux autres, et un message qui dépend du résultat de la vérification est formé.

12. Système de positionnement (6) présentant une unité mobile (12, 18, 40, 50-56), au moins trois unités de base (8) et une unité d'évaluation (10) qui détermine la position de l'unité mobile (12, 18, 40, 50-56) par rapport aux unités de base (8), l'unité mobile (12, 18, 40, 50-56) étant conçue pour émettre au moins un signal, les unités de base (8) étant prévues pour recevoir ce dernier et l'utiliser pour envoyer un signal de réponse à l'unité d'évaluation (10), l'unité d'évaluation (10) étant prévue pour déterminer l'instant d'entrée des signaux de réponse chez elle et, à partir de la position connue des unités de base (8) par rapport à l'unité d'évaluation (10), déterminer les instants d'émission des signaux de réponse des unités de base (8), à partir de là et des temps de latence des unités de base (8) déterminer les instants de réception du signal de l'unité mobile (12, 18, 40, 50-56) sur les unités de base (8), de là la différence de temps (D) entre les différents instants de réception, calculer de là au moins deux espaces partiels (T) et déterminer la position de l'unité mobile (12, 18, 40, 50-56) à partir du point de concours des espaces partiels (T).

FIG 1

EP 3 159 710 B1

FIG 2

FIG 3

EP 3 159 710 B1

12, 18

$S_1$
n0 ms

8a

$S_{1A}$
n1 ms

8b

$S_{1B}$
n2 ms

8c

$S_{1C}$
n3 ms

8d

$S_{1D}$
n4 ms

$Q_{1i}$
n2,5/n4,5 ms

10

FIG 4

FIG 5

FIG 6

EP 3 159 710 B1

FIG 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20140004877 A1
- WO 2015006979 A1
- US 20050282558 A1
- US 20110135149 A1